(19) Europäisches Patentamt
European Patent Office
Office européen des brevets

(11) **EP 4 379 445 A2**

(12) **EUROPÄISCHE PATENTANMELDUNG**

(43) Veröffentlichungstag:
**05.06.2024 Patentblatt 2024/23**

(21) Anmeldenummer: **24170556.5**

(22) Anmeldetag: **11.02.2022**

(51) Internationale Patentklassifikation (IPC):
***G02B 21/24*** *(2006.01)*

(52) Gemeinsame Patentklassifikation (CPC):
**G01B 11/005; G01B 11/24; G01B 21/045; G02B 21/0016; G02B 21/244; G02B 21/367; G06T 7/571**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(62) Dokumentnummer(n) der früheren Anmeldung(en) nach Art. 76 EPÜ:
**22156433.9 / 4 227 636**

(71) Anmelder: **Carl Zeiss Industrielle Messtechnik GmbH**
**73447 Oberkochen (DE)**

(72) Erfinder:
• **Baum, Michael**
**89075 Ulm (DE)**

• **Plohmann, Daniel**
**89415 Lauingen (DE)**
• **Schmidt, Sören**
**07743 Jena (DE)**
• **Aidukas, Tomas**
**5200 Brugg (CH)**

(74) Vertreter: **Brunotte, Joachim Wilhelm Eberhard Patentanwälte Bressel und Partner mbB Potsdamer Platz 10 10785 Berlin (DE)**

Bemerkungen:
Diese Anmeldung ist am 16-04-2024 als Teilanmeldung zu der unter INID-Code 62 erwähnten Anmeldung eingereicht worden.

(54) **BESTIMMUNG VON TIEFENWERTEN EINES OBERFLÄCHENBEREICHS EINES WERKSTÜCKS**

(57)      Die Erfindung betrifft ein Verfahren (40) zum Erzeugen von Tiefenwerten eines Oberflächenbereichs einer Oberfläche eines Werkstücks (12), mit:
- Empfangen (42) eines Fokalbildstapels, wobei der Fokalbildstapel eine Mehrzahl von Bildern des Werkstücks (12) aufweist, wobei die Bilder den Oberflächenbereich der Oberfläche des Werkstücks (12) mit in einer Tiefenrichtung unterschiedlichen Fokalebenenpositionen (22) als Bildbereich des Bildes abbilden, wobei jedem Bild des Fokalbildstapels eine Fokalebenenposition (22) zugeordnet ist und wobei Bildpunkte der Bilder jeweils einem entsprechenden Objektpunkt auf der Oberfläche des Werkstücks (12) zugeordnet sind;
- Bestimmen (44) jeweils eines Bildschärfenwerts für eine Mehrzahl von Teilbereichen des Bildbereichs jedes Bildes des Fokalbildstapels;
- Anpassen (46) eines Modells, mit dem ein Verlauf von Bildschärfenwerten jeweils für einen gemeinsamen abgebildeten Teilbereich des Oberflächenbereichs über die Bilder des Bildstapels beschreibbar ist, jeweils an tatsächliche Verläufe der bestimmten Bildschärfenwerte derjenigen Teilbereiche der Bildbereiche, die einen Stapel von Bild-Teilbereichen bilden, weil sie einem gemeinsamen abgebildeten Teilbereich des Oberflächenbereichs entsprechen;
- Bestimmen (52) jeweils eines Tiefenwerts für die gemeinsamen Teilbereiche, wobei der Tiefenwert in dem Verlauf von Bildschärfenwerten des Modells einer größten Bildschärfe für den jeweiligen Stapel von Bild-Teilbereichen entspricht und ein Maß für eine Tiefenposition des gemeinsamen abgebildeten Teilbereichs des Oberflächenbereichs ist;
- Korrigieren (52) mindestens eines Abbildungsfehlers der Bilder des Fokalbildstapels für zumindest einen der bestimmten oder zu bestimmenden Tiefenwerte, wobei der mindestens eine Abbildungsfehler ein Kippfehler und/oder ein Bildfeldwölbungs-Fehler und/oder ein Astigmatismus-Fehler ist.

**(Forts. nächste Seite)**

40

Fig. 2

## Beschreibung

Die vorliegende Erfindung betrifft ein insbesondere computerimplementiertes Verfahren zum Bestimmen von Tiefenwerten eines Oberflächenbereichs eines Werkstücks. Des Weiteren betrifft die vorliegende Erfindung ein Verfahren zum Vermessen eines Oberflächenbereichs eines Werkstücks mit einem optischen Sensor eines Messgeräts. Ferner betrifft die vorliegende Erfindung eine Anordnung mit einem Messgerät, insbesondere einem Koordinatenmessgerät oder einem Mikroskop, zum Vermessen einer Oberfläche eines Werkstücks. Außerdem betrifft die vorliegende Erfindung ein Computerprogramm.

Es ist bekannt, zur Vermessung der Oberfläche von Werkstücken Messgeräte mit optischen Sensoren zu verwenden. Zu den Messgeräten gehören insbesondere konventionelle Koordinatenmessgeräte und Mikroskope. Als Ergebnis der Vermessung werden Koordinaten der Oberfläche erhalten. Die optischen Sensoren ermöglichen ein berührungsloses Erfassen der Koordinaten eines Werkstücks. Z. B. wird in optischen Messgeräten das zu vermessende Werkstück auf einem Tisch mittels eines Werkstückhalters aufgespannt. Der Tisch bildet dabei (bezüglich eines kartesischen Koordinatensystems mit den Koordinaten X, Y, Z) z. B. eine X-Y-Ebene. Senkrecht zu dieser Ebene, d.h. zum Beispiel in Z-Richtung des kartesischen Koordinatensystems, ist der optische Sensor von dem zu vermessenden Werkstück beabstandet.

Da herkömmliche optische Sensoren, wie beispielsweise Flächenkameras, nur zweidimensionale (2D) Daten aufnehmen können, wird die Bildtiefe oder Tiefeninformation in Z-Richtung mittels einer zusätzlichen Technik bestimmt. Beispielsweise ist es bekannt, taktil messende Sensoren zusammen mit optischen Sensoren zu verwenden.

Optische Sensoren weisen typischerweise eine abbildende Optik und zumindest ein Sensorelement auf, das die von der Oberfläche des Werkstücks ausgehende, aufgenommene Strahlung detektiert und ein der Strahlungsintensität (insbesondere der Strahlungsflussdichte) entsprechendes Signal liefert. Im Fall von Kameras, die ein zweidimensionales Bild liefern, ist ein zweidimensionales Feld von Sensorelementen vorhanden, die üblicherweise in einer Ebene liegen und in aller Regel in Zeilen und Spalten angeordnet sind. Es sind jedoch auch optische Sensoren mit in lediglich einer Spalte beziehungsweise Zeile hintereinander angeordneten Sensorelementen bekannt. Um mit einer solchen Sensoranordnung ein zweidimensionales Bild aufnehmen zu können, findet eine Relativbewegung von Werkstück und optischem Sensor statt, und zwar quer zur optischen Achse der abbildenden Optik. Außerdem ist es möglich, dass der optische Sensor in einer bestimmten Relativposition zum Werkstück lediglich einen Bildpunkt oder eine für das gewünschte Bild in beiden Bildrichtungen (z. B. X und Y) nicht ausreichende Anzahl von Bildpunkten aufnehmen kann, weil lediglich ein Sensorelement oder eine zu geringe Anzahl von Sensorelementen vorhanden ist. Um ein zweidimensionales Bild der Oberfläche des Werkstücks erzeugen zu können, ist in diesem Fall eine Relativbewegung zwischen dem Werkstück und dem optischen Sensor in zwei verschiedenen Richtungen jeweils quer zur optischen Achse der abbildenden Optik erforderlich.

Wenn in dieser Beschreibung von einem Bildpunkt bzw. Sensorelement, das den Bildpunkt erzeugt, die Rede ist, dann kann das jeweilige Sensorelement optional aus mehreren Teil-Sensorelementen zusammengesetzt sein kann, wie es zum Beispiel bei der Erfassung mehrerer Farbwerte der Fall ist, wie zum Beispiel Farbwerten des RGB- oder des CMYK-Farbraumes oder entsprechend einem anderen Farbraum oder Farbsystem. Alle Teil-Sensorelemente liefern Sensorwerte, die zu demselben Bildpunkt beitragen. Insbesondere unterscheiden sich die Teil-Sensorelemente hinsichtlich der Frequenzbereiche der Strahlung, für die sie sensitiv sind. Auch kommt es vor, dass die Signale von Sensorelementen, die jeweils einzeln einen Bildpunkt erzeugen können, zu einem gemeinsamen Bildpunkt zusammengefasst werden. Es können daher zum Beispiel auch Signale von Sensorelementen, die für die gleichen Frequenzbereiche sensitiv sind, zu einem gemeinsamen Bildpunkt zusammengefasst werden.

Eine bekannte Möglichkeit besteht darin, die in den einzelnen zweidimensionalen Bildern fehlende Tiefeninformation mittels mehrerer optischer Messungen zu bestimmen. Die Schärfe bzw. Unschärfe des Bildes hängt mit dem Abstand der abbildenden Optik und/oder der ggf. verstellbaren Brennweite der abbildenden Optik zusammen. Die abbildende Optik kann auch als optisches System bezeichnet werden oder ist Teil des optischen Systems des optischen Sensors. Liegt das Sensorelement des optischen Sensors, welches den jeweiligen Bildpunkt aufnimmt, in der Fokalebene, wird der Objektpunkt auf der Oberfläche des Werkstücks, scharf abgebildet. Mit zunehmendem Abstand von der Fokalebene wird die Abbildung des Objektpunktes unschärfer, d. h. die von dem Objektpunkt ausgehende aufgenommene Strahlung verteilt sich über einen größeren Bereich der Ebene, in der das Sensorelement liegt. Wird daher z. B. ein Objektpunkt, der auf der Oberfläche des Werkstücks liegt, auf die Fokalebene zu bewegt, dann wird die Abbildung des Objektpunkts schärfer. Wird dagegen der Objektpunkt von der Fokalebene wegbewegt, wird die Abbildung des Objektpunkts unschärfer. Alternativ wird zum Beispiel im Fall einer Zoom-Optik die Brennweite der abbildenden Optik verändert. Die Verstellung der Brennweite hat einen der Veränderung des relativen Abstandes zwischen Objektpunkt und Sensorelement entsprechenden Effekt.

Durch das Aufnehmen von Bildern, bei unterschiedlichem Abstand zwischen der Werkstückoberfläche und dem Sensorelement oder den Sensorelementen des optischen Sensors und/oder bei unterschiedlicher Brennweite der abbildenden Optik, kann daher eine Mehrzahl von Bildern der Werkstückoberfläche erzeugt werden, die üblicherweise als Fokal(bild)stapel oder Fokus(bild)stapel bezeichnet wird. Vorzugsweise ist jedes dieser Bilder ein zweidimensionales Bild.

Aus dem Fokalbildstapel kann die Tiefeninformation der Objektpunkte mittels einer Technik ermittelt werden, die als "Shape From Focus" (SFF) bekannt ist. Die SFF Technik ist in Verbindung mit gering auflösenden Messtechniken, beispielsweise der Fotographie, bekannt, wobei ein visuell zufriedenstellendes Aussehen der 3D Informationen im Vordergrund steht. Viele dieser Implementierungen der SFF Technik sind nicht für die industrielle Messtechnik geeignet, bei der eine hohe Reproduzierbarkeit und eine hohe Genauigkeit angestrebt werden.

Auch in der Mikroskopie sind Verfahren bekannt, die die SFF Technik verwenden. Beispielsweise zeigt die Druckschrift EP 2 598 836 A1 ein Verfahren zur Kompensation von Beleuchtungsdefiziten im mikroskopischen SFF, wobei zuerst das Reflexionsvermögen der Szene unter Verwendung eines Projektorkamerasystems geschätzt wird und dann das mikroskopische SFF auf einen Stapel von Reflexionskarten anstatt auf die ursprünglichen Bilddaten angewendet wird.

Des Weiteren sind derartige Verfahren auch in dem Artikel "Shape From Focus System" von Shree K. Nayar, IEEE Conference on Computer Vision and Pattern Recognition (CVPR), 1992, 302-308 sowie in dem Artikel "Focus Variation Instruments" von Franz Helmli, Kapitel 7 aus dem Buch "Optical Measurement of Surface Topography", Seiten 131-166, Springer Verlag, und in der Veröffentlichung "Analysis of focus measure operators for shape-from-focus" von Said Pertuz, Domenec Puig und Miguel Angel Garcia in Pattern Recognition 46 (2013), Seiten 1415 bis 1432, beschrieben.

Das SSF-Verfahren ist thematisch eng mit Autofokusanwendungen verbunden. Bekannt ist es dabei, für einen Bereich der durch den Fokalbildstapel erfassten Oberfläche des Werkstücks einen einzigen Tiefenwert zu bestimmen. Der erfasste Bereich entspricht zum Beispiel 100 × 100 Pixel in den Bildern des Fokalbildstapels. Aus diesem Grund findet eine Mittelwertbildung bei der Berechnung von Bildschärfewerten über den Bereich der Oberfläche statt.

Aus zwei Gründen kann der Tiefenwert ein ungenauer bzw. nicht repräsentativer Mittelwert für den erfassten Bereich sein. Zum einen kann sich innerhalb des erfassten Bereichs z. B. ein Teilbereich befinden, für den kein sinnvoller Tiefenwert aus dem Fokalbildstapels ermittelbar ist. Zum anderen verfälschen optische Fehler bei der Abbildung des erfassten Bereichs auf den Sensor der Erfassungseinrichtung die Bestimmung des Tiefenwertes.

US 2013/162807 A1 beschreibt ein Verfahren zur automatischen Anpassung der Lichtverhältnisse in Bezug auf die Ergebnisse einer Fokus-3D-Rekonstruktion von Punkten (PFF). Basierend auf Helligkeitskriterien werden automatisch mehrere Beleuchtungsniveaus gefunden, und bei jedem Beleuchtungsniveau wird ein Bildstapel aufgenommen. Die Ergebnisse der 3D-Rekonstruktion bei jeder ausgewählten Lichtstärke werden unter Verwendung einer Z-Höhen-Qualitätsmetrik kombiniert. In einer Ausführungsform wird der Z-Höhenwert des PFF-Datenpunkts, der einer X-Y-Position zuzuordnen ist, basierend auf diesem PFF-Datenpunkt mit dem besten entsprechenden Z-Höhen-Qualitätsmetrikwert an dieser X-Y-Position ausgewählt.

DE 10 2014 006717 A1 beschreibt ein Verfahren zur Erzeugung einer dreidimensionalen Information eines Objektes in einem Digitalmikroskop, bei dem folgende Schritte ausgeführt werden: Aufnahme eines Bildes für jeweils eine Fokusposition; Ablegen des Bildes mit der zugehörigen Fokusposition in einem Bildstapel; Wiederholen der erstgenannten Schritte an verschiedenen Fokuspositionen; Berechnen eines EDOF (extended depth of field)-Bildes aus den Einzelbildern.

Gemäß DE 10 2004 047928 A1 wird zur 3D-Vermessung von Objektoberflächen ein optisches Verfahren vorgeschlagen, das mit einer Kamera arbeitet. Diese weist eine Fokusebene auf, die einen sehr geringen Tiefenschärfebereich festlegt. Durch Verfahren der Z-Position der Fokusebene und wiederholte Bildaufnahme wird ein Bildstapel, bestehend aus Einzelbildern, erzeugt. Die Einzelbilder weisen jeweils nur dort scharfe, d. h. kontrastreiche Partien auf, in denen die Objektoberfläche die Fokusebene schneidet. Jedem Einzelbild ist ein Z-Wert zugeordnet. Die scharf abgebildeten Bereiche der einzelnen Bilder werden zu einem Ergebnisbild zusammengefasst, dessen Pixeln jeweils die X-Koordinate, die Y-Koordinate und die Z-Koordinate zugeordnet ist.

Es ist eine Aufgabe der vorliegenden Erfindung, ein Verfahren zum Vermessen einer Oberfläche eines Werkstücks und eine Anordnung mit einem Messgerät bereitzustellen, mittels denen Tiefenwerte eines Oberflächenbereichs des Werkstücks erzeugt werden können. Insbesondere soll dies mit hoher Genauigkeit möglich sein.

Die Erfindung betrifft ein insbesondere computerimplementiertes Verfahren zum Bestimmen von Tiefenwerten eines Oberflächenbereichs eines Werkstücks, wobei insbesondere die im Folgenden näher beschriebenen Schritte ausgeführt werden.

Die Erfindung betrifft ferner ein Verfahren zum Vermessen einer Oberfläche eines Werkstücks mit einem optischen Sensor eines Messgeräts, wobei der optische Sensor und das Werkstück in einer Tiefenrichtung voneinander beabstandet sind. Dabei werden die Bilder eines Oberflächenbereichs des Werkstücks mittels des optischen Sensors erfasst, wobei die Bilder insbesondere jeweils den Oberflächenbereich mit in der Tiefenrichtung unterschiedlichen Fokalebenenpositionen als Bildbereich des Bildes abbilden. Die Bilder bilden somit insbesondere einen Fokalbildstapel, wobei jedem Bild des Fokalbildstapels eine Fokalebenenposition zugeordnet ist und wobei Bildpunkte der Bilder jeweils einem entsprechenden Objektpunkt auf der Oberfläche des Werkstücks zugeordnet sind. Außerdem betrifft die Erfindung eine Anordnung mit einer Recheneinrichtung und mit einem Messgerät, insbesondere einem Koordinatenmessgerät oder einem Mikroskop, zum Vermessen einer Oberfläche eines Werkstücks. Die Recheneinrichtung ist ausgestaltet, das Verfahren zum Bestimmen von Tiefenwerten in einer der hier in dieser Beschreibung beschriebenen Ausgestaltungen durchzuführen.

Ein Schritt ist das Empfangen eines Fokalbildstapels, wobei der Fokalbildstapel eine Mehrzahl von Bildern des Werkstücks aufweist, wobei die Bilder den Oberflächenbereich der Oberfläche des Werkstücks mit in einer Tiefenrichtung unterschiedlichen Fokalebenenpositionen als Bildbereich des Bildes abbilden, wobei jedem Bild des Fokalbildstapels eine Fokalebenenposition zugeordnet ist und wobei Bildpunkte der Bilder jeweils einem entsprechenden Objektpunkt auf der Oberfläche des Werkstücks zugeordnet sind. Optional gehört auch das Aufnehmen des Fokalbildstapels zum Verfahren.

Wie erwähnt ist jedem Bild des Fokalbildstapels eine Fokalebenenposition zugeordnet, insbesondere jedem Bild des Fokalbildstapels eine unterschiedliche Fokalebenenposition.

Wie erwähnt hat ein mit dem optischen Sensor erfasstes Bild eine Mehrzahl von Bildpunkten. Jeder Bildpunkt bildet einen Objektpunkt des Bereichs der Oberfläche des Werkstücks ab. Die Anzahl der Bildpunkte entspricht somit der Anzahl der abgebildeten Objektpunkte. Allerdings ist die Abbildung in den meisten Bildern des Fokalbildstapels und den meisten Bildbereichen der Bilder wie erwähnt unscharf, sodass es in den meisten Bildern keine mathematisch eineindeutige Zuordnung zwischen Objektpunkten und Bildpunkten gibt. Vielmehr wird im Fall einer unscharfen Abbildung Strahlung von verschiedenen Objektpunkten auf einen Bildbereich mit einer Mehrzahl von Bildpunkten abgebildet. Dennoch kann ein Objektpunkt per Definition mathematisch eineindeutig einem Bildpunkt zugeordnet werden. Idealerweise ist dieser zugeordnete Bildpunkt derjenige Bildpunkt, auf den der Objektpunkt im Fall einer scharfen Abbildung (also wenn sich das Sensorelement die Sensorelemente des Bildpunkts in der Fokalebene befinden) abgebildet wird.

Derzeitige optische Sensoren können Auflösungen von mehreren Megapixeln haben. Die Anzahl der Bildpunkte eines erfassten Bildes und entsprechend auch die Anzahl der abgebildeten Objektpunkte entsprechen der Anzahl der Pixel des optischen Sensors. Die erfassten Bilder können somit mehrere Millionen Bildpunkte aufweisen.

Während des Erfassens der Bilder wird die Fokalebenenposition des optischen Sensors in einer Tiefenrichtung relativ zu dem Werkstück verändert, um jedes Bild mit einer unterschiedlichen, definierten Fokalebenenposition zu erfassen. Vorzugsweise sind der optische Sensor und das Werkstück in der Tiefenrichtung relativ zueinander bewegbar, so dass ein Abstand in der Tiefenrichtung zwischen dem Werkstück und dem optischen Sensor veränderbar ist. Beispielsweise kann das Messgerät eine Antriebseinrichtung aufweisen, die dazu ausgebildet ist, den optischen Sensor und das Werkstück in der Tiefenrichtung relativ zueinander zu bewegen. Während des Erfassens der Bilder kann dann der Abstand des optischen Sensors zu dem Werkstück in der Tiefenrichtung verändert werden, um die Fokalebenenposition für jedes Bild zu verändern. Die Tiefenrichtung kann z. B. eine Z-Richtung eines kartesischen Koordinatensystems sein, wobei dann die erfassten Bilder eine Abbildung des Bereichs der Oberfläche des Werkstücks in der X- und Y-Richtung sind. Mit anderen Worten ist die Abbildung der Bilder senkrecht zu der Tiefenrichtung. Die Bilder können dabei in unterschiedlichen, z. B. definierten Abständen zu dem Werkstück aufgenommen werden. "Definiert" bedeutet in diesem Zusammenhang, dass die Abstände, in denen die Bilder erfasst werden, im Voraus festgelegt und somit bekannt sind. Beispielsweise können die Bilder in $50\,\mu m$ Schritten aufgenommen werden.

Da die Bilder aus unterschiedlichen Abständen zu dem Werkstück aufgenommen werden, variiert die Position der Fokalebene bzw. die Ebene größter Schärfe des optischen Sensors für die Bilder. Die optische Einstellung des optischen Sensors, insbesondere die Brennweite des Objektivs, kann dabei konstant bleiben oder auch - wie noch näher beschrieben wird - variieren. Jedes Bild ist mit einer anderen Fokalebenenposition, d.h. der Position der Fokalebene relativ zum Werkstück, erfasst. Da der Abstand der Bildebene von der Werkstückoberfläche abhängig von der Position im Bild bzw. der Position der Sensorelemente im Allgemeinen variiert, kann der Abstand in Bezug auf eine bestimmte Bildposition definiert sein, zum Beispiel die Bildmitte. Der Abstand eines Bildes entspricht einem Tiefenwert in der Tiefenrichtung, insbesondere einer Z-Position in der Z-Richtung. Mit anderen Worten bilden die erfassten Bilder jeweils den Bereich der Oberfläche des Werkstücks aus unterschiedlichen, definierten Abständen zu dem Werkstück in einer Tiefenrichtung ab, wobei jedem Bild des Fokalbildstapels ein Abstand zugeordnet ist. Daher ist auch für jedes Bild die zugeordnete Fokalebenenposition dem Abstand zugeordnet.

Alternativ oder zusätzlich kann während des Erfassens der Bilder die Änderung der Fokalebenenposition durch ein Nachfokussieren der Optik bzw. ein Verändern der Brennweite des Objektivs des optischen Sensors erreicht werden. Das heißt man ordnet jeder Fokuseinstellung am Objektiv einen entsprechenden Abstand des optischen Sensors zu der eingestellten Fokalebene in der Tiefenrichtung zu. Dieser Abstand kann dann für die Bestimmung der Tiefenwerte verwendet werden. Die Position der Fokalebene bzw. der Ebene größter Schärfe des optischen Sensors wird auf optische Weise für die verschiedenen Bilder variiert und es kann auf diese Weise der Fokalbildstapel gebildet werden. Der Abstand zwischen dem Werkstück und dem optischen Sensor kann dann insbesondere auch konstant bleiben. In jedem Fall, auch wenn der Abstand zwischen dem Werkstück und dem optischen Sensor ebenfalls verändert wird, bestimmt die Veränderung der Optik die Fokalebenenposition zumindest mit.

Insbesondere kann jedes Bild die gleiche Anzahl an Bildpunkten aufweisen. Wie erwähnt kann jeder Bildpunkt eines Bildes einem entsprechenden Objektpunkt des Werkstücks aus dem abgebildeten Bereich der Oberfläche des Werkstücks zugeordnet sein. Ein Objektpunkt kann auch als Messpunkt bezeichnet werden. Jedem Objektpunkt auf der Oberfläche des Werkstücks kann eine Position in dem bereits erwähnten kartesischen Koordinatensystem zugeordnet sein, insbesondere eine X-Position in der X-Richtung, eine Y-Position in der Y-Richtung und eine Z-Position in der Z-Richtung. Die Z-Position in der Z-Richtung kann auch als Tiefenwert in der Tiefenrichtung bezeichnet werden. Da die erfassten Bilder des Fokalbildstapels jeweils einen gemeinsamen Bereich der Oberfläche des Werkstücks abbilden, sind die Bildpunkte der Bilder denselben Objektpunkten zugeordnet. Insbesondere sind die Bildpunkte der Bilder mit denselben X- und Y-Koordinaten demselben Objektpunkt zugeordnet.

Ein weiterer Schritt des Verfahrens ist das Bestimmen jeweils eines Bildschärfenwerts für eine Mehrzahl von Teilbereichen des Bildbereichs jedes Bildes des Fokalbildstapels. Der Bildschärfenwert kann in einem speziellen Ausführungsbeispiel für jeden Bildpunkt bestimmt werden, d.h. die Teilbereiche sind in diesem Fall die Bereiche von Bildpunkten. Die Teilbereiche können jedoch auch größere Teilbereiche sein. Der Bildschärfenwert ist ein Maß dafür, wie scharf das Objekt und insbesondere die den Bildpunkten in dem Teilbereich zugeordneten Objektpunkte abgebildet ist. Zur Bestimmung des Bildschärfenwerts kann beispielsweise die Helligkeit, ein Kontrast-Wert oder ein GrauWert von Bildpunkten ausgewertet werden. In der oben bereits erwähnten Veröffentlichung von Said Pertuz et al. sind in Abschnitt 2.1 verschiedene Arten von Bildschärfenwerten (dort als "Focus measure operators" bezeichnet) beschrieben. Sie werden in der Veröffentlichung entsprechend dem Funktionsprinzip in sechs Familien eingeteilt: gradientenbasierte, Laplace-basierte, Wavelet-basierte, Statistik-basierte, auf einer diskreten Kosinustransformation basierte und nicht in die zuvor genannten fünf Familien einzuteilende Arten von Bildschärfenwerten. In der vorliegenden Anmeldung wird nicht näher auf die Funktionsweise dieser Operatoren bzw. Bildschärfenwerte eingegangen. Anzumerken ist jedoch, dass alle Operatoren nicht nur einen einzigen Bildwert berücksichtigen, sondern jeweils eine Umgebung von Bildwerten. Zum Beispiel kann ein Gradient von Bildwerten nur dann errechnet werden, wenn der Verlauf von Bildwerten in zumindest einer Richtung in der Bildebene ausgewertet wird.

Um die Tiefenwerte von Objektbereichen zu bestimmen, die den genannten Bild-Teilbereichen entsprechen, und die in dem erwähnten speziellen Ausführungsbeispiel Objektpunkte sind, wird vorgeschlagen, wie folgt vorzugehen: Teilbereiche des durch die Bilder des Fokalbildstapels abgebildeten Bildbereichs können als Stapel von Bild-Teilbereichen aufgefasst werden, weil sie einem gemeinsamen Teilbereich des Oberflächenbereichs entsprechen. Insbesondere haben die Bildpunkte aller Teilbereiche desselben Stapels dieselben X- und Y- Koordinaten, die auch die X- und Y-Koordinaten der zugeordneten Objektpunkte des von Ihnen abgebildeten gemeinsamen Oberflächenbereichs des Werkstücks sind. Es wird nun für jeden einer Mehrzahl von Stapeln von Teilbereichen ein Modell eines Verlaufs der von der Fokalebenenposition in der Tiefenrichtung abhängigen Bildschärfenwerte an die Bildschärfenwerte des jeweiligen Stapels von Bild-Teilbereichen angepasst. Anders ausgedrückt ist mit dem Modell ein Verlauf von Bildschärfenwerten jeweils für einen gemeinsamen abgebildeten Teilbereich des Oberflächenbereichs über die Bilder des Bildstapels beschreibbar. Grundsätzlich ist der Verlauf der Bildschärfenwerte abhängig von der Fokalebenenposition, aber auch von dem Abstand der Fokalebene zu dem abgebildeten Teilbereich des Oberflächenbereichs und somit abhängig von dessen Tiefe. Das Modell wird an den tatsächlichen Verlauf der Bildschärfenwerte in der Tiefenrichtung angepasst, und zwar für jeden auszuwertenden Stapel von Bild-Teilbereichen.

Grundsätzlich ermöglicht es das Modell, eine Tiefenposition mit größter Bildschärfe genau zu ermitteln. Die größte Bildschärfe kann z. B. zufällig an der Stelle eines Bildes liegen, oder zwischen zwei Bildern. Allerdings existiert nicht in jedem Fall, d. h. für jeden Stapel von Bild-Teilbereichen, eine eindeutige oder sinnvolle größte Bildschärfe. Der Grund dafür liegt darin, dass in manchen Fällen keiner der Teilbereiche des Stapels den zugeordneten Objektbereich scharf oder annähernd scharf abgebildet. Eine annähernd scharfe Abbildung liegt insbesondere dann vor, wenn die Bildebene eines fiktiven, nicht tatsächlich vorhandenen Teilbereichs, der aber zwischen zwei Teilbereichen des Stapels liegt, mit der Fokalebene zusammenfällt und somit eine scharfe Abbildung ergeben würde.

Dafür, dass keiner der Teilbereiche des Stapels den zugeordneten Objektbereich scharf oder annähernd scharf abgebildet, kann es wiederum verschiedene praktische Gründe geben. Zum Beispiel kann die Fokalebene, die eine scharfe Abbildung eines Objektbereichs ergeben würde, an einer Tiefenposition liegen, die außerhalb und insbesondere weit außerhalb des Bereichs von Tiefenposition liegt, der von dem Stapel von Bild-Teilbereichen abgedeckt wird. Dies kann in der Praxis auftreten, wenn die Oberfläche eines Werkstücks sehr große Tiefen-Unterschiede aufweist. Ferner kann durch den Stapel der Teilbereiche ein Objektbereich abgebildet sein, der kein Objektbereich des Werkstücks ist. Dieser Objektbereich gehört daher zu dem Hintergrund des Werkstücks. In der Praxis kann dies auftreten, wenn der abgebildete Objektbereich über die Ränder des Werkstücks hinausgeht oder wenn das Werkstück eine Durchgangsbohrung oder eine andere sich durch das Werkstück hindurch erstreckende Aussparung, insbesondere eine Aussparung mit einem geschlossenen umlaufenden Rand, aufweist.

Das Modell kann insbesondere durch eine mathematische Funktion der Bildschärfe in Abhängigkeit der Tiefenposition oder der Fokalebenenposition oder in Abhängigkeit von einer äquivalenten Größe (wie zum Beispiel einen Index der einzelnen Bildbereiche in dem Stapel beschrieben) werden oder beschrieben sein. Als Funktionen eignen sich besonders solche, die achsensymmetrisch zu einem Extremum, insbesondere zu einem globalen Extremum, sind.

Das Extremum ist insbesondere ein Maximum, entsprechend dem Maximum des Bildschärfenwerts. Es ist jedoch nicht ausgeschlossen, ein Modell bzw. eine Funktion mit einem Minimum zu verwenden. Dies kann beispielsweise auf einfache Weise durch das Bilden der negativen Funktion zu einer Funktion mit einem globalen Maximum erreicht werden. Zum Beispiel kann es sich bei der genannten mathematischen Funktion der Bildschärfe um eine Verteilungsdichtefunktion, wie beispielsweise der Verteilungsdichtefunktion einer Normalverteilung handeln. Insbesondere dann kann der Tiefenwert jedes Objektbereichs dem Erwartungswert, auch roh Median oder Zentralwert genannt, der jeweiligen Normalverteilung entsprechen. Eine Normalverteilung ist vorteilhaft, da das Schärfeprofil in der Tiefenrichtung in vielen Fällen gut durch eine Normalverteilung beschrieben wird.

In einer weiteren Ausgestaltung werden Parameter, insbesondere Einpassungsparameter, der durch die Verteilungsdichtefunktion beschriebenen Verteilung, insbesondere der Verteilungsdichtefunktion der Normalverteilung, über ein lineares Gleichungssystem Ax = B bestimmt, wobei A eine 3x3 Matrix ist, die die Koeffizienten des Gleichungssystems repräsentiert (A ist abhängig von der Anzahl der Bilder und den Tiefenwerten der Bilder), B ein Vektor ist, der die Lösungen des Gleichungssystems aufweist (B ist abhängig von den Tiefenwerten der Bilder und den entsprechenden Fokuswerten der jeweiligen Bildpunkte), und x ein Vektor ist, der die zu bestimmenden Parameter (Erwartungswert, Standardabweichung, Amplitude) der Verteilung aufweist, wobei der Tiefenwert (Erwartungswert) auf Basis der Parameter bestimmt wird.

Grundsätzlich lässt sich der natürliche Logarithmus auf die statistische Verteilung und insbesondere auf die Normalverteilung anwenden und lässt sich die resultierende Gleichung in linearisierter Form durch linearisierte Parameter darstellen.

Die zu bestimmenden Parameter der Verteilung können diese linearisierten Parameter sein. Der Erwartungswert, die Standardabweichung und/oder die Amplitude können daher auf Basis der linearisierten Parameter bestimmt werden. Insbesondere kann die Mehrzahl der erfassten Bilder mehr als drei Bilder aufweisen. Mit anderen Worten kann die Anzahl der erfassten Bilder, die den Fokalbildstapel bilden, drei übersteigen. Da viele statistische Verteilungen und insbesondere die Normalverteilung jedenfalls in normierter Form mittels drei Parametern vollständig beschreibbar sind, ist die Verteilung überbestimmt, wenn mehr als drei Bilder aufgenommen werden. Zur Anpassung der Verteilungsdichtefunktion kann wie bei der Anpassung anderer mathematischer Funktionen an den tiefenabhängigen Schärfenverlauf die Methode der kleinsten Quadrate verwenden werden. Durch Anwendung der Methode der kleinsten Quadrate auf die zuvor genannte linearisierte Gleichung mit den linearisierten Parametern ergibt sich das Gleichungssystem Ax = B. Dieses Gleichungssystem ist überbestimmt. Die Matrix A hängt dabei von der Anzahl der entsprechenden Bildbereiche und den Tiefenwerten bzw. Abständen der jeweiligen Bildbereiche ab. Die Anzahl der Bildbereiche, die dem jeweiligen Objektpunkt zugeordnet sind, entspricht der Anzahl der Bilder des Fokalbildstapels.

Dementsprechend entsprechen die Tiefenwerte bzw. Abstände der jeweiligen Bildpunkte ebenfalls den Tiefenwerten bzw. Abständen der Bilder des Fokalbildstapels. Die Matrix A ist somit für alle Objektbereiche dieselbe. Der Lösungsvektor B hängt von den Tiefenwerten bzw. Abständen der jeweiligen Bildbereiche und den bestimmten Fokuswerten der jeweiligen Bildbereiche ab. Diese linearisierte Methode zum Anpassen/Anfitten der mathematischen Funktion (insbesondere entsprechend der statistischen Verteilung und konkreter der Normalverteilung), d.h. die Bestimmung der Parameter der mathematischen Funktion, wird auch Caruana-Methode oder Caruana-Algorithmus genannt.

In einer weiteren Ausgestaltung können die Parameter der mathematischen Funktion mittels der folgenden Gleichung bestimmt: x = $A^{-1}$ B werden, wobei $A^{-1}$ B einer Optimierungslösung eines überbestimmten Gleichungssystems basierend auf der Methode der kleinsten Quadrate entspricht.

Im Allgemeinen ist es bekannt, dass zum Einpassen einer mathematischen Funktion an gemessene Daten die Parameter der Funktion mittels nichtlinearer Optimierungs-Methoden bestimmt werden können. Diese Lösungsverfahren sind allerdings sehr zeitaufwendig und können unter Umständen mehrere Stunden dauern. In der industriellen Messtechnik ist es wünschenswert, dass die Messergebnisse nicht nur hochgenau, sondern auch in relativ kurzer Zeit vorliegen, insbesondere in wenigen Sekunden. Durch die Linearisierung des Optimierungsproblems entsprechend des Caruana-Algorithmus können z. B. effiziente numerische Bibliotheken zur Lösung mit Hilfe der kleinsten Quadrate verwendet werden.

Infrage für die Modellierung kommen auch abschnittsweise definierte Funktionen, also Funktionen, die die Bildschärfe für verschiedene Abschnitte der Tiefenposition bzw. der Fokalebenenposition oder der äquivalenten Größe in unterschiedlicher Weise mathematisch beschreiben. Auch wenn für die meisten vorkommenden Optiken bevorzugt, muss die mathematische Funktion nicht symmetrisch zum Extremum sein. Es sind auch Optiken mit nicht symmetrischer Abhängigkeit der Bildschärfe vom Abstand zur Fokalebene bekannt. Auch ist es nicht zwingend erforderlich, dass das Modell durch eine mathematische Funktion beschrieben wird und dass diese mathematische Funktion angepasst wird. Beispielsweise kann auch in der Reihenfolge der Bildbereiche eines Stapels jeweils die Änderung des Bildschärfenwerts ermittelt werden und kann unter Berücksichtigung einer Mehrzahl von aufeinanderfolgenden Bildschärfenwert-Änderungen die Tiefenposition des Bildschärfen-Maximums ermittelt werden. Auch wenn dies letztendlich einer mathematischen Funktion entspricht, müssen die Parameter der Funktion nicht explizit ermittelt werden. Umgekehrt wird es jedoch bevorzugt, dass eine mathematische Funktion angepasst wird und bei der Anpassung zumindest ein Parameter angepasst wird.

Auch wenn nicht vom Gegenstand der unabhängigen Ansprüche umfasst, wird nun zusätzlich vorgeschlagen, ein Qualitätsmaß einer Qualität der Anpassung des Modells an die Bildschärfenwerte für die Stapel von Bild-Teilbereichen zu bestimmen, und zwar insbesondere für jeden der Stapel von Bild-Teilbereichen, an deren Bildschärfenwerte das Modell angepasst wurde. Das Qualitätsmaß ermöglicht die objektive Bewertung der Anpassung des Modells. Fehlanpassungen, die insbesondere auch dann auftreten, wenn innerhalb des von dem Stapel von Bild-Teilbereichen abgedeckten Bereichs von Tiefenpositionen kein Schärfemaximum liegt, können daher anhand des Qualitätsmaßes ermittelt werden.

Insbesondere weist das Modell wie erwähnt ein Extremum an einer zu bestimmenden Tiefenposition auf, wobei das Extremum der größten Bildschärfe entspricht. Wenn sich innerhalb des von dem Stapel von Bild-Teilbereichen abgedeckten Bereichs von Tiefenpositionen ein Schärfemaximum befindet, kann das Modell mit guter Qualität an den Verlauf der Bildschärfenwerte des Stapels von Teilbereichen angepasst werden und aus der Tiefenposition des Extremums ergibt sich die Tiefe größter Schärfe.

Wenn dagegen die Qualität der Anpassung gering ist, kann dies anhand des Qualitätsmaßes festgestellt werden und ist das geringe Qualitätsmaß ein Indiz für eine nicht oder nicht mit guter Qualität bestimmbare Tiefenposition, die der größten Bildschärfe entspricht. Beispielsweise liegen in einem solchen Fall die Bildschärfenwerte des Stapels von Bildbereichen alle auf einer Seite des Maximums der mathematischen Funktion, weshalb die Unsicherheit bei der Bestimmung des Maximums zu groß ist.

Insbesondere kann das Qualitätsmaß aus Unterschieden (und insbesondere Differenzen) der Bildschärfenwerte und der Funktionswerte der mathematischen Funktion berechnet werden, die an den tatsächlichen Verlauf der Bildschärfenwerte des Stapels von Bildbereichen angepasst wurde. Insbesondere können diese Residuen linear (und insbesondere durch Bildung des absoluten Betrages) oder mit einer höheren Potenz in die Berechnung des Qualitätsmaßes eingehen. Grundsätzlich kommen, insbesondere bei Verwendung einer Verteilungsdichtefunktion, die bekannten statistischen Größen, wie die Norm des Residuums, als Qualitätsmaß für die Anpassung infrage. Insbesondere ist es für eine objektive Anwendung des Qualitätsmaßes von Vorteil, wenn die Verteilungsdichtefunktion normiert ist, sodass zum Beispiel das Maximum der Verteilungsdichte immer den Wert Eins hat.

Nun können optional etwaig vorhandene Stapel von Bild-Teilbereichen, für die das bestimmte Qualitätsmaß ein (z. B. vorgegebenes) Qualitätskriterium nicht erfüllt, ausgesondert werden. Zum Beispiel besteht das Qualitätskriterium darin, dass das Qualitätsmaß einen (z. B. vorgegebenen) Grenzwert nicht unterschreitet. Je nach Definition des Qualitätsmaßes kann das "Unterschreiten" mathematisch auch bedeuten, dass ein Zahlenwert des Qualitätsmaßes einen Zahlen-Grenzwert überschreitet. Auch schließt das "Unterschreiten" je nach Ausgestaltung des Verfahrens bzw. der Vorgehensweise gegebenenfalls mit ein, dass der Grenzwert erreicht ist.

Das Qualitätskriterium kann vorgegeben sein, aber alternativ zum Beispiel nach Bestimmung der Werte des Qualitätsmaßes für die verschiedenen Teilbereiche im Nachhinein festgelegt werden. Dabei kann das Qualitätskriterium insbesondere nach seiner Art bereits vorgegeben sein, jedoch erst im Nachhinein derart festgelegt werden, dass sich daraus ergibt, welche Werte des Qualitätsmaßes zum Aussondern eines Teilbereichs führen.

Das Aussondern kann auf jede Weise erfolgen, die es ermöglicht, den ausgesonderten Stapel von Bild-Teilbereichen von nicht ausgesonderten Stapeln von Teilbereichen zu unterscheiden. Zum Beispiel kann in einem Datensatz des ausgesonderten Stapels ein entsprechender Eintrag vorgenommen werden. Alternativ oder zusätzlich kann der Datensatz zumindest aus einem für das weitere Vorgehen verwendeten Datenspeicher gelöscht werden.

Ferner kann nun optional für solche (und vorzugsweise für jeden der) Stapel von Bild-Teilbereichen, für die das bestimmte Qualitätsmaß ein Qualitätskriterium erfüllt, ein Tiefenwert bestimmt werden. Auch ohne Berücksichtigung des Qualitätsmaßes kann in dem Verlauf von Bildschärfenwerten des Modells jeweils ein Tiefenwert für die gemeinsamen Teilbereiche bestimmt werden. Dabei entspricht der Tiefenwert einer größten Bildschärfe für den jeweiligen Stapel von Bild-Teilbereichen und ist ein Maß für eine Tiefenposition des gemeinsamen Teilbereichs des Oberflächenbereichs. Dieser gemeinsame Teilbereich des Oberflächenbereichs ist der auf die Teilbereiche des Stapels abgebildete Oberflächen-Teilbereich. Wie bereits erwähnt hängen die Grenzen des abgebildeten Oberflächen-Teilbereichs auch von der Schärfe der Abbildung ab und können daher für die einzelnen Bildbereiche des Stapels variieren. Insbesondere kann der Oberflächen-Teilbereich auch ein Teilbereich sein, der einem einzigen Pixel der Bilder entspricht.

Vorzugsweise wird aus den bestimmten Tiefenwerten eine Karte der Tiefen des Oberflächenbereichs erzeugt. Zumindest dann, wenn wenigstens ein Stapel von Bildbereichen ausgesondert wurde, kann die Karte eine Lücke aufweisen, für die sie keinen Tiefenwert enthält. Für diese Beschreibung kann eine Karte der Tiefen, die auch Tiefenkarte genannt wird, zum Beispiel als Bild ausgegeben werden. Allgemein jedoch liegt bereits eine Tiefenkarte vor, wenn Informationen über einen Zusammenhang zwischen Positionen auf der Oberfläche und Tiefenwerten der Positionen gegeben sind. Insbesondere werden diese Informationen als Tiefenkarte ausgegeben. Die Tiefenkarte kann auch als Höhenkarte bezeichnet werden. Auf Basis der Tiefenkarte und des Fokalbildstapels kann dann z. B. ein extended-depth-of-field (EDOF) Bild erzeugt werden, das ein Bild des Oberflächenbereichs des Werkstücks mit erweiterter Feldtiefe ist.

Insbesondere ermöglicht es die Bestimmung der Tiefenwerte für die einzelnen Teilbereiche, einen genaueren Mittelwert bzw. repräsentativen Wert für einen Oberflächenbereich des abgebildeten Werkstücks als bei der eingangs (bezüglich eines Autofokus) erwähnten bekannten Vorgehensweise zu erhalten. Ein solcher Oberflächenbereich kann auch als interessierender Bereich bzw. englisch "Region of Interest" (RoI) bezeichnet werden. Er kann vor oder nach Bestimmung der Tiefenwerte festgelegt werden. Es können auch verschiedene Oberflächenbereiche festgelegt werden, wobei diese Oberflächenbereiche optional einander teilweise überlappen können. Insbesondere wird der jeweilige Oberflächenbereich vollständig durch Teilbereiche gebildet, für die das Qualitätsmaß der Anpassung des Modells bestimmt wurde. Wenn zumindest einer dieser Teilbereiche ausgesondert wurde, kann dennoch ein genauer Mittelwert bzw. repräsentativer Tiefenwert bestimmt werden. Bei der bekannten Vorgehensweise dagegen hätte dieser ausgesonderte Teilbereich das Ergebnis der Bestimmung des Tiefenwertes für den Oberflächenbereich verfälscht.

Wie weiter unten noch näher beschrieben wird, wird ferner eine Korrektur von optischen Fehlern, die wie im Folgenden noch beschrieben wird insbesondere in Bezug auf jeden einzelnen Teilbereich und den dazu bestimmten Tiefenwert ausgeführt. Auch dies verbessert die Genauigkeit bzw. die Repräsentativität des für einen Oberflächenbereich bestimmten Tiefenwertes.

Insbesondere wird vorgeschlagen: Ein Computerimplementiertes Verfahren zum Erzeugen von Tiefenwerten eines Oberflächenbereichs einer Oberfläche eines Werkstücks, mit den folgenden Schritten:

- Empfangen eines Fokalbildstapels, wobei der Fokalbildstapel eine Mehrzahl von Bildern des Werkstücks aufweist, wobei die Bilder den Oberflächenbereich der Oberfläche des Werkstücks mit in einer Tiefenrichtung unterschiedlichen Fokalebenenpositionen als Bildbereich des Bildes abbilden, wobei jedem Bild des Fokalbildstapels eine Fokalebenenposition zugeordnet ist und wobei Bildpunkte der Bilder jeweils einem entsprechenden Objektpunkt auf der Oberfläche des Werkstücks zugeordnet sind;
- Bestimmen jeweils eines Bildschärfenwerts für eine Mehrzahl von Teilbereichen des Bildbereichs jedes Bildes des Fokalbildstapels;
- Anpassen eines Modells, mit dem ein Verlauf von Bildschärfenwerten jeweils für einen gemeinsamen abgebildeten Teilbereich des Oberflächenbereichs über die Bilder des Bildstapels beschreibbar ist, jeweils an tatsächliche Verläufe der bestimmten Bildschärfenwerte derjenigen Teilbereiche der Bildbereiche, die einen Stapel von Bild-Teilbereichen bilden, weil sie einem gemeinsamen abgebildeten Teilbereich des Oberflächenbereichs entsprechen;
- optionales Bestimmen eines Qualitätsmaßes einer Qualität der Anpassung des Modells an die Bildschärfenwerte für die Stapel von Bild-Teilbereichen;
- optionales Aussondern etwaig vorhandener Stapel von Bild-Teilbereichen, für die das bestimmte Qualitätsmaß ein Qualitätskriterium nicht erfüllt;
- Bestimmen jeweils eines Tiefenwerts für die gemeinsamen Teilbereiche, wobei der Tiefenwert in dem Verlauf von Bildschärfenwerten des Modells einer größten Bildschärfe für den jeweiligen Stapel von Bild-Teilbereichen entspricht und ein Maß für eine Tiefenposition des gemeinsamen abgebildeten Teilbereichs des Oberflächenbereichs ist;
- Korrigieren mindestens eines Abbildungsfehlers der Bilder des Fokalbildstapels für zumindest einen der bestimmten oder zu bestimmenden Tiefenwerte, wobei der mindestens eine Abbildungsfehler ein Kippfehler und/oder ein Bildfeldwölbungs-Fehler und/oder ein Astigmatismus-Fehler ist.

Ferner betrifft die Erfindung ein Verfahren zum Vermessen einer Oberfläche eines Werkstücks mit einem optischen Sensor eines Messgeräts, wobei der optische Sensor und das Werkstück in einer Tiefenrichtung voneinander beabstandet sind, mit den folgenden Schritten:

- Erfassen einer Mehrzahl von Bildern eines Oberflächenbereichs des Werkstücks mittels des optischen Sensors, wobei die Bilder jeweils den Oberflächenbereich mit in der Tiefenrichtung unterschiedlichen Fokalebenenpositionen als Bildbereich des Bildes abbilden, wobei die Bilder einen Fokalbildstapel bilden, wobei jedem Bild des Fokalbildstapels eine Fokalebenenposition zugeordnet ist und wobei Bildpunkte der Bilder jeweils einem entsprechenden Objektpunkt auf der Oberfläche des Werkstücks zugeordnet sind,
- Bestimmen von Tiefenwerten des Oberflächenbereichs des Werkstücks durch Ausführung des insbesondere computerimplementierten Verfahrens gemäß einer der in dieser Beschreibung beschriebenen Ausgestaltungen.

Außerdem betrifft die Erfindung ein Computerprogramm, das Programmcodemittel zur Durchführung des computerimplementierten Verfahrens gemäß einer der in dieser Beschreibung beschriebenen Ausgestaltungen aufweist, wenn das Computerprogramm auf einer Recheneinrichtung ausgeführt wird.

Auch betrifft die Erfindung eine Anordnung mit einer Recheneinrichtung und mit einem Messgerät, insbesondere einem Koordinatenmessgerät oder einem Mikroskop, zum Vermessen einer Oberfläche eines Werkstücks, wobei das Messgerät einen Raum zum Anordnen des Werkstücks während der Vermessung der Oberfläche des Werkstücks aufweist. Der Raum kann zum Beispiel durch einen Werkstückhalter des Messgeräts begrenzt und/oder definiert sein. Unter einem Werkstückhalter ist auch zum Beispiel ein Messtisch zu verstehen, auf dem das Werkstück zur Vermessung durch das Messgerät positioniert werden kann. Das Messgerät weist einen optischen Sensor auf, der dazu ausgebildet ist, Bilder eines Oberflächenbereichs des Werkstücks zu erfassen, während der optische Sensor und das Werkstück in einer Tiefenrichtung voneinander beabstandet sind, wobei die Recheneinrichtung dazu eingerichtet ist, Tiefenwerte des Oberflächenbereichs des Werkstücks durch Ausführung des computerimplementierten Verfahrens in einer der in dieser Beschreibung beschriebenen Ausgestaltungen zu bestimmen.

Insbesondere kann aus den für mehrere Teilbereiche bzw. entsprechende Teil-Oberflächenbereiche des Werkstücks bestimmten Tiefenwerten ein gemeinsamer repräsentativer Wert gebildet werden, zum Beispiel ein Mittelwert oder Durchschnittswert. Diese mehreren Teilbereiche können optional insbesondere mit Ausnahme etwaig vorhandener ausgesonderter Teilbereiche, für die das Qualitätsmaß das Qualitätskriterium nicht erfüllt, einem zusammenhängenden Bereich auf der Oberfläche des Werkstücks entsprechen.

Die beschriebenen Ausgestaltungen der Verfahren, des Computerprogramms und der Anordnung können optional auch das oben erwähnte Bestimmen eines Qualitätsmaßes einer Qualität der Anpassung des Modells an die Bildschärfenwerte für die Stapel von Bild-Teilbereichen und das Aussondern etwaig vorhandener Stapel von Bild-Teilbereichen aufweisen.

Vorteilhafterweise wird das neue Verfahren unter Verwendung einer Verarbeitungseinheit und/oder einer Steuereinrichtung durchgeführt, die insbesondere ein Mehrzweckcomputer oder ein Spezialcomputer sein kann, wobei insbesondere ein Computerprogramm gespeichert und ausgeführt wird, wobei das Computerprogramm zum Vermessen des Oberflächenbereichs des Werkstücks und/oder zum Bestimmen von Tiefenwerten gemäß den hier beschriebenen Verfahren gestaltet und ausgebildet ist. Bei den Computern kann es sich insbesondere handeln um: Smartphone, Personal Digital Assistant, Tabletcomputer, Eingebettetes System, Einplatinencomputer, Personalcomputer, Hostrechner, Server, Thin Client, Netbook, Laptop oder Notebook, Mainframe Computer oder Großrechner. Insbesondere kann das Verfahren zumindest teilweise auf einer oder mehreren Einheiten (zum Beispiel Grafikkarte(n)) eines Computers oder Computernetzes ausgeführt werden, wie zum Beispiel Einheiten mit jeweils zumindest einer Recheneinheit (zum Beispiel jeweils zumindest einer GPU, d.h. eines Grafikprozessors). Insbesondere ermöglichen es mehrere Einheiten,

- parallel für mehrere Stapel von Bild-Teilbereichen und/oder für die einzelnen Bild-Teilbereiche des Stapels die Bildschärfenwerte zu bestimmen und/oder
- parallel für mehrere Stapel von Bild-Teilbereichen das Modell des Verlaufs der von der Fokalebenenposition in der Tiefenrichtung abhängigen Bildschärfenwerte an die Bildschärfenwerte jeweils derjenigen Teilbereiche anzupassen, die einen Stapel von Bild-Teilbereichen bilden, und/oder
- parallel für mehrere Stapel von Bild-Teilbereichen das Qualitätsmaß der Qualität der Anpassung des Modells an die Bildschärfenwerte zu bestimmen.

Unter einem Werkstück wird insbesondere ein Messobjekt verstanden, das vermessen wird. Das Werkstück weist eine Oberfläche auf. Bilder eines Bereichs der Oberfläche können mit einem optischen Sensor eines Messgeräts erfasst werden. Das Messgerät kann insbesondere ein Koordinatenmessgerät oder ein Mikroskop sein. Der optische Sensor kann beispielsweise einen Bildsensor und ein optisches System aufweisen. Der Bildsensor kann beispielsweise ein ladungsgekoppelter Halbleiterelementsensor sein, der auch CCD (charge-couple device) Sensor genannt wird. Der CCD Sensor kann ein monochromer Sensor (insbesondere ein Sensor, der Graustufen detektieren kann) oder ein Farbsensor sein. Das optische System kann den Bereich der Oberfläche des Werkstücks auf dem Bildsensor abbilden. Das optische System kann insbesondere ein zumindest objektseitig telezentrisches Objektiv aufweisen.

Die erwähnte Antriebseinrichtung kann den Abstand zwischen dem Werkstück und dem optischen Sensor einstellen. Dazu kann die Antriebseinrichtung einen Werkstückhalter und/oder den optischen Sensor in der Tiefenrichtung bewegen. Die Antriebseinrichtung kann beispielsweise einen piezoelektrischen Antrieb, einen Direktantrieb oder einen Spindelantrieb aufweisen. Ein Spindelantrieb ist besonders geeignet, da dieser eine hohe Auflösung hat, große Lasten bewegen kann und einen großen Erfassungsbereich in der Tiefenrichtung aufweist.

Die Antriebseinrichtung und der optische Sensor können z. B. mittels der Steuereinrichtung des Messgeräts gesteuert werden. Dazu kann die Steuereinrichtung beispielsweise eine Regelungseinheit aufweisen, die Steuerbefehle an den optischen Sensor und die Antriebseinrichtung senden kann.

Die Berechnungsschritte zum Bestimmen der Tiefenwerte werden insbesondere durch die erwähnte Recheneinrichtung durchgeführt. In spezieller Ausführung kann die Recheneinrichtung Teil der Steuereinrichtung des Messgeräts sein. Die Recheneinrichtung kann jedoch auch auf andere Weise realisiert werden, zum Beispiel als Teil eines zusätzlich vorhandenen Computers oder Computernetzes.

Die Bilder für den Fokalbildstapel werden insbesondere in definierten, beispielsweise diskreten, Abständen, insbesondere Schritten, aufgenommen und die Schärfe der Bildbereiche (oder in spezieller Ausgestaltung der Bildpunkte) wird wie beschrieben evaluiert. Durch das Lokalisieren der Tiefenposition des schärfsten Bildbereichs in dem Fokalbildstapel in der Tiefenrichtung erhält man eine Tiefeninformation für das Werkstück. Der einfachste Weg, um die Tiefenwerte zu bestimmen, besteht darin, Tiefenwerte den Indizes des Fokalbildstapels in der Tiefenrichtung zuzuordnen. Mit anderen Worten könnte man für jeden Objektbereich den schärfsten Bildbereich in dem Fokalbildstapel bestimmen und den entsprechenden Tiefenwert dem Objektbereich zuordnen. Entsprechende Tiefenwerte haben aber eine Tiefenauflösung, die durch das Abtasten, insbesondere die Schrittweite des Abtastens, des Fokalbildstapels festgesetzt ist. Wenn beispielsweise die Bilder in Schritten von $50\,\mu m$ aufgenommen werden, entspricht dies dann auch der Tiefenauflösung.

Die Schärfe und insbesondere die Intensität jedes Bildbereichs oder Bildpunkts in dem Fokalbildstapel steht in direkter und vorhersagbarer Beziehung zu der Unschärfe. Die Intensität jedes Bildbereichs oder Bildpunkts ändert sich entsprechend wie der Bildbereich oder Bildpunkt scharf oder unscharf eingestellt ist. Das Schärfenprofil bzw. Intensitätsprofil in der Tiefenrichtung folgt dabei einer Kurve, die im "schärfsten Punkt" ein Maximum hat, und zu beiden Seiten des Maximums abfällt. Die Schärfe der Bildbereiche des Fokalbildstapels folgt somit ebenfalls einer derartigen, re-dimensionierten Kurve. Indem nun für jeden abgebildeten Objektbereich ein Modell an die entsprechenden Bildpunkte in der Tiefenrichtung angepasst wird, kann insbesondere aus dem Extremum des Modells ein genauerer Tiefenwert für den entsprechenden Objektbereich ermittelt werden. Auf diese Weise ist es möglich, Tiefenwerte mit größerer Auflösung und Genauigkeit zu erhalten. Mit anderen Worten können Tiefenwerte mit hoher Reproduzierbarkeit und hoher Genauigkeit erzeugt werden und die Oberfläche des Werkstücks kann mit hoher Reproduzierbarkeit und hoher Genauigkeit dreidimensional vermessen werden.

In einer Ausgestaltung weist das Messgerät einen Werkstückhalter auf, wobei das Werkstück auf dem Werkstückhalter zum Vermessen angeordnet wird. Der Werkstückhalter kann insbesondere ein Werktisch, ein Messtisch oder ein Objekttisch sein. Es ist jedoch auch möglich, dass das Werkstück an einer nicht nach oben oder schräg nach oben orientierten Oberfläche des Werkstückhalters von diesem gehalten wird. Der Werkstückhalter ist dazu ausgebildet, das zu vermessende Werkstück während des Messprozesses in einer definierten Position zu halten. Dazu kann der Werkstückhalter beispielsweise auf der Oberseite eine ebene Fläche aufweisen, auf der das Werkstück während des Vermessens angeordnet werden kann.

In einer Ausgestaltung weist das Messgerät eine Antriebseinrichtung auf, wobei die Antriebseinrichtung den optischen Sensor relativ zu dem Werkstückhalter in der Tiefenrichtung bewegt und/oder den Werkstückhalter relativ zu dem optischen Sensor in der Tiefenrichtung bewegt, um den Abstand zwischen dem Werkstück und dem optischen Sensor zu verändern. Mit anderen Worten ist die Antriebseinrichtung dazu ausgebildet, den Werkstückhalter und den optischen Sensor relativ zueinander zu bewegen, den Abstand zwischen dem Werkstück und dem optischen Sensor zu verändern. Dazu kann die Antriebseinrichtung entweder den Werkstückhalter in der Tiefenrichtung bewegen oder den optischen Sensor in der Tiefenrichtung bewegen oder den Werkstückhalter und den optischen Sensor in der Tiefenrichtung bewegen.

Alternativ oder zusätzlich kann der Abstand zwischen dem Werkstück und dem optischen Sensor in diskreten Schritten verändert werden. Dabei kann der Abstand schrittweise vergrößert oder verkleinert werden. Beispielsweise kann der Abstand in $50\,\mu m$ Schritten verändert werden.

Alternativ oder zusätzlich kann das Messgerät eine Beleuchtungseinrichtung aufweisen, wobei das Verfahren des Weiteren den folgenden Schritt aufweist: Beleuchten des Werkstücks mittels der Beleuchtungseinrichtung während des Erfassens der Bilder des Fokalbildstapels.

Die Beleuchtungseinrichtung wird dazu verwendet, zumindest den abgebildeten Teil der Oberfläche des Werkstücks auszuleuchten. Das reflektierte Licht kann dann insbesondere dazu verwendet werden, um ein Bild in dem optischen Sensor zu erzeugen. Auf diese Weise kann der Bereich des Werkstücks gleichmäßig ausgeleuchtet werden und die Tiefenwerte des Oberflächenbereichs mit im Wesentlichen gleicher Genauigkeit bestimmt werden. Die Beleuchtung kann beispielsweise eine koaxiale Beleuchtung, eine Ringbeleuchtung, eine Dunkelfeldbeleuchtung, eine diffuse Beleuchtung oder eine Punktquellenbeleuchtung sein. Die Beleuchtungseinrichtung kann insbesondere eine monochromatische Lichtquelle, beispielsweise ein monochromatischer Laser, sein. Eine monochromatische Lichtquelle hat den Vorteil, dass keine chromatischen Aberrationen auftreten können.

Wie bereits oben erwähnt weist das Verfahren den folgenden Schritt auf: Korrigieren mindestens eines der bestimmten oder zu bestimmenden Tiefenwerte hinsichtlich mindestens eines Abbildungsfehlers der Bilder des Fokalbildstapels, wobei der mindestens eine Abbildungsfehler ein Kippfehler und/oder ein Bildfeldwölbung-Fehler und/oder ein Astigmatismus-Fehler ist.

Der Schritt des Korrigierens wird insbesondere durchgeführt, nachdem die Tiefenwerte der Oberflächenbereiche bestimmt worden sind. Alle optischen Systeme weisen innerhalb der Fertigungstoleranzen Abbildungsfehler auf, die auch als optische Aberrationen bezeichnet werden. Diese führen zu einem systematischen Messfehler in den berechneten Tiefenwerten. Feldkrümmung und Astigmatismus sind besonders problematisch, da diese die Tiefenwerte verfälschen. Auch der Kippfehler oder Neigungsfehler kann eine nicht vernachlässigbare Größe annehmen und kann so korrigiert werden. Es können zumindest die Aberrationen erster und zweiter Ordnung im Aberrationsschema nach Zernike berücksichtigt und korrigiert werden. Durch die vorgeschlagene Korrektur kann eine digitale Aberrationskorrektur durchgeführt werden, mittels der die Genauigkeit der Tiefenwerte und insbesondere der Tiefenkarte weiter erhöht wird.

In einer Ausgestaltung ist zum Korrigieren des Kippfehlers jedem Oberflächenbereich, und insbesondere jedem Bereich der Tiefenkarte, ein erster Korrekturwert zugeordnet, wobei der Tiefenwert jedes Teilbereichs des Fokalbildstapels, und insbesondere jedes Teilbereichs der Tiefenkarte mittels des entsprechenden ersten Korrekturwerts korrigiert wird.

Das optische System kann beispielsweise einen Abbildungsfehler aufweisen, der dazu führt, dass das Abbild des Werkstücks gekippt auf dem aufnehmenden Bildsensor dargestellt wird. Der erste Korrekturwert entspricht dieser Verkippung und ermöglicht es, die Tiefenwerte zu korrigieren, indem die Verkippung korrigiert und insbesondere herausgerechnet wird.

Die Korrektur des jeweiligen Tiefenwerts kann nicht nur bezüglich des Kippfehlers insbesondere durch Subtraktion des entsprechenden, insbesondere des ersten, Korrekturwerts von dem jeweiligen Tiefenwert erfolgen. Der Korrekturwert kann insbesondere vorberechnet oder vorbestimmt sein. Auf diese Weise lässt sich insbesondere ein Kippfehler in den Tiefenwerten korrigieren. Durch die Korrektur wird die Genauigkeit der Tiefenwerte weiter erhöht.

In einer weiteren Ausgestaltung ist zum Korrigieren des Bildfeldwölbung-Fehlers jedem Oberflächenbereich und insbesondere jedem Bereich der Tiefenkarte ein zweiter Korrekturwert zugeordnet, wobei der jeweilige Tiefenwert mittels des entsprechenden zweiten Korrekturwerts korrigiert wird.

Wenn die Optik des optischen Systems eine Bildfeldwölbung aufweist, wird das Bild nicht auf eine Ebene, sondern auf eine gewölbte Fläche abgebildet. Es ergibt sich daher ein sogenannter Lagefehler. Die Position des Strahlenschnittpunkts längs der optischen Achse ist dann abhängig von der Position der Bildbereiche bzw. Bildpunkte, das heißt für jeden einzelnen Bildbereich wird ein Bildfeldwölbungswert zugeordnet. Je weiter Objekt- und damit Bildbereiche von der optischen Achse entfernt sind, umso mehr ist der Bildbereich in Achsrichtung, also der Tiefenrichtung, verschoben. Mit anderen Worten kann das optische System einen Abbildungsfehler aufweisen, der dazu führt, dass das Abbild des Werkstücks gewölbt auf dem aufnehmenden Bildsensor dargestellt wird. Der zweite Korrekturwert entspricht diese Wölbung und ermöglicht es, die Tiefenwerte der zu korrigieren, insbesondere indem die Wölbung herausgerechnet wird. Die Korrektur des jeweiligen Tiefenwerts kann insbesondere durch Subtraktion des entsprechenden zweiten Korrekturwerts von dem jeweiligen Tiefenwert erfolgen. Der zweite Korrekturwert kann insbesondere vorberechnet oder vorbestimmt sein. Auf diese Weise lässt sich ein Bildfeldwölbung-Fehlers in den Tiefenwerten korrigieren. Durch Korrektur des Bildfeldwölbung-Fehlers wird die Genauigkeit der Tiefenkarte weiter erhöht.

Alternativ oder zusätzlich kann zum Korrigieren des Astigmatismus-Fehlers eine Winkelkarte des abgebildeten Teils der Oberfläche (insbesondere kann auch die gesamte Oberfläche abgebildet werden) des Werkstücks erzeugt werden, wobei jedem Oberflächenbereiche ein dritter Korrekturwert und ein vierter Korrekturwert zugeordnet sind, wobei der Tiefenwert jedes Oberflächenbereichs basierend auf dem dritten Korrekturwert, dem vierten Korrekturwert und der Winkelkarte korrigiert wird.

Astigmatismus ist eine Aberration der "schiefen" Strahlen. Ein schief einfallendes Strahlenbündel wird in der Meridional- und der Sagittalebene unterschiedlich stark gebrochen. In Richtung der Meridionalebene ist eine Linse perspektivisch verkürzt, woraus eine kürzere Brennweite resultiert als in der Sagittalebene. Mit anderen Worten ist Astigmatismus richtungsabhängig, insbesondere abhängig von Richtungen von etwaigen Kanten in den Abbildungen der Bilder. Der Astigmatismus kann für jeden Punkt über eine winkelabhängige Funktion, insbesondere Modell- oder Fitfunktion, mit mindestens zwei Parametern beschrieben werden, die den ersten und zweiten Korrekturwert aufweisen oder diesem entsprechen. Mit anderen Worten ist das Astigmatismus-Modell eine Anpassung der über den Kreisazimuth dargestellten Tiefenabweichung. Insbesondere kann der Astigmatismus als Linearkombination aus zwei radialsymmetrischen Sinusfunktionen modelliert werden. Dabei entspricht der dritte Korrekturwert dem Koeffizienten in der ersten Sinusfunktion und der vierte Koeffizient dem Koeffizienten in der zweiten Sinusfunktion. Vorzugsweise sind die beiden Sinusfunktionen um $\pi/2$ verschoben. Der dritte Korrekturwert und der vierte Korrekturwert stellen somit zwei Korrekturwerte in zwei senkrecht zueinanderstehenden Richtungen dar. Zur Korrektur des Astigmatismus wird eine Winkelkarte des Bereichs der Oberfläche des Werkstücks erzeugt. Die Winkelkarte wird basierend auf einem Bildgradienten bestimmt. Der Bildgradient kann basierend auf einem EDOF Bild oder dem gesamten oder einem Teil des Fokalbildstapels für jeden Oberflächenbereich bestimmt werden. Dazu wird für jeden Bereich ein Bildgradient berechnet. Der Bildgradient bestimmt sich aus einer Änderung der Helligkeit zu umliegenden Bildpunkten. Die Richtung des Bildgradienten kann mittels eines Winkels dargestellt werden. Somit ist in der Winkelkarte jedem Punkt ein Winkel zugeordnet, der die Richtung des Bildgradienten angibt. Mit anderen Worten stellt die Winkelkarte für jeden Punkt der abgebildeten Oberfläche den entsprechenden Winkel des Bildgradienten dar. Basierend auf diesem Winkel kann zur Korrektur des Tiefenwerts des jeweiligen Teilbereichs dann der Anteil des dritten und des vierten Korrekturwerts berechnet werden. Der Anteil des dritten Korrekturwerts kann insbesondere durch das Produkt aus dem dritten Korrekturwert mit dem Sinus des Winkels des jeweiligen Punkts bestimmt werden. Entsprechend kann auch der Anteil des vierten Korrekturwerts durch das Produkt aus dem vierten Korrekturwert mit dem Cosinus des Winkels des jeweiligen Punkts bestimmt werden. Die Korrektur des jeweiligen Tiefenwerts kann insbesondere durch Subtraktion der Summe der Anteile des dritten und vierten Korrekturwerts von dem jeweiligen Tiefenwert erfolgen.

Der dritte Korrekturwert und der vierte Korrekturwert können insbesondere vorberechnet oder vorbestimmt sein. Auf diese Weise lässt sich ein Astigmatismus-Fehlers in den Tiefenwerten korrigieren. Durch Korrektur des Astigmatismus -Fehlers wird die Genauigkeit der Tiefenwerte weiter erhöht. Des Weiteren können auch direktionale Sobel-

Filter genutzt werden, um eine Mehrzahl von Winkelkarten des Bereichs zu erzeugen. Dabei kann dann eine gemittelte Winkelkarte verwendet werden, um Rauschen oder Störungen zu reduzieren bzw. zu eliminieren.

Alternativ oder zusätzlich weist das Verfahren des Weiteren den folgenden Schritt auf: Bestimmen des ersten Korrekturwerts und/oder des zweiten Korrekturwerts und/oder des dritten und vierten Korrekturwerts für jeden Teilbereich, wobei insbesondere vor dem Vermessen des Werkstücks eine Tiefenkarte eines Kalibrationsobjekts, insbesondere eines Punktgitters, erzeugt wird, wobei der jeweilige Korrekturwert basierend auf einer Abweichungen der Tiefenkarte zu einem bekannten Oberflächenprofil des Kalibrationsobjekts bestimmt wird.

Das Kalibrationsobjekt kann auch als Kalibrationsmaske bezeichnet werden bzw. sein. Das Kalibrationsobjekt hat vorzugsweise runde Strukturen. Insbesondere kann das Kalibrationsobjekt ein Punktgitter oder eine Lochmaske sein. Ein Punktgitter ist eine regemäßige Anordnung von Punkten. Insbesondere ist ein Punktgitter eine geometrische Struktur, bei dem Punkte in gleichen Abständen in zwei oder drei Raumrichtungen voneinander angeordnet sind. Im Falle von zwei Raumrichtungen stehen diese senkrecht aufeinander. Im Falle von drei Raumrichtungen sind diese paarweise in einen Winkel von 60° zueinander angeordnet. Jeder Punkt des Punktgitters hat eine räumliche Ausdehnung und ist vorzugsweise kreisrund. Jeder Punkt des Punktgitters kann durch eine Mehrzahl von Bildpunkten eines erfassten Bildes abgebildet werden. Jeder Punkt weist eine ebene Oberfläche auf. Das Oberflächenprofil des Punktgitters ist somit im Voraus bereits bekannt. Insbesondere kann das Punktgitter so auf dem Werkstückhalter angeordnet werden, dass die Punkte des Punktgitters in einer horizontalen Ebene liegen. Der erste Korrekturwert kann auf Basis einer Verkippung des Abbilds des Punktgitters gegenüber einer horizontalen Ebene bestimmt werden. Der zweite Korrekturwert kann auf Basis einer Wölbung des Abbilds des Punktgitters gegenüber einer horizontalen Ebene bestimmt werden. Zur Bestimmung des dritten Korrekturwerts und des vierten Korrekturwert wird jeder Punkt des Punktgitters einzeln betrachtet. Der dritte und der vierte Korrekturwert können dann auf Basis einer Abweichung des berechneten Tiefenprofils gegenüber dem tatsächlichen Tiefenprofil des jeweiligen Punkts, das eine ebene Fläche ist, bestimmt werden.

Zum Bestimmen zumindest eines der Korrekturwerte kann daher im Voraus eine Tiefenkarte eines Punktgitters verwendet. Das Erzeugen der Tiefenkarte des Punktgitters erfolgt entsprechend dem Erzeugen der Tiefenkarte des Werkstücks, aber ohne den Schritt des Korrigierens der Abbildungsfehler. Jeder bestimmte Korrekturwert kann insbesondere in einer elektronischen Speichereinheit gespeichert werden. Das Messgerät kann diese Speichereinheit aufweisen. Nachdem die gewünschten Korrekturwerte bestimmt sind, kann dann das Werkstück vermessen werden. Grundsätzlich ist es selbstständig auch möglich, zunächst die Tiefenwerte der Oberfläche des konkret zu vermessenden Werkstücks zu bestimmen und dann die Tiefenkarte für die Korrektur der Abbildungsfehler zu bestimmen. Die aus dem Fokalbildstapel bestimmten Tiefenwerte können in jedem Fall mittels der bestimmten Korrekturwerte korrigiert werden. Auf diese Weise können die Korrekturwerte einfach bestimmt werden.

Insbesondere kann das Bestimmen der ersten Korrekturwerte die folgenden Schritte aufweisen:

- Erzeugen einer ersten Punktwolke aller Punkte des Punktgitters basierend auf Mittelwerten der Tiefenwerte jedes einzelnen Punkts des Punktgitters;
- Einpassen einer Ebene durch die ersten Punktwolke; und
- Bestimmen der ersten Korrekturwerte basierend auf einem Kippwinkel einer Normalen der Ebene gegenüber der Tiefenrichtung.

Wie zuvor bereits beschrieben, wird jeder Punkt des Punktgitters mittels einer Mehrzahl von Bildpunkten eines erfassten Bildes abgebildet. Die Tiefenwerte jedes einzelnen Punkts können nach dem Erzeugen der Tiefenkarte des Punktgitters segmentiert werden. Dabei werden zunächst die Punkte der Tiefenkarte bestimmt, die jeweils einem Punkt des Punktgitters zugeordnet sind und diesen abbilden. Dann werden die entsprechenden Tiefenwerte gemittelt, um einen gemittelten Tiefenwert für jeden Punkt des Punktgitters zu bestimmen. Durch das Mitteln der Tiefenwerte wird der Einfluss eines Astigmatismus-Fehlers auf die Tiefenwerte entfernt. Die gemittelten Tiefenwerte werden dann verwendet um die erste Punktwolke zu erzeugen. Dann wird eine Ebene durch die erste Punktwolke eingepasst. Von dieser Ebene kann eine Normale bestimmt werden. Der Kippwinkel entspricht einem Winkel zwischen der Normalen und der Tiefenrichtung. Für jeden Punkt der Tiefenkarte wird dann der erste Korrekturwert auf Basis des Kippwinkels bestimmt. Insbesondere werden die ersten Korrekturwerte derart bestimmt, dass sie eine Drehung der Tiefenkarte um ihren Mittelpunkt entgegen dem Kippwinkel bewirken, wobei der Betrag des Drehwinkels der Drehung dem Betrag des Kippwinkels entspricht. Die ersten Korrekturwerte korrigieren somit die Verkippung der Abbildung eines Objekts mittels des optischen Sensors.

Alternativ oder zusätzlich kann das Bestimmen der zweiten Korrekturwerte die folgenden Schritte aufweisen:

- Erzeugen einer zweiten Punktwolke aller Punkte des Punktgitters basierenden auf Mittelwerten der Tiefenwerte jedes einzelnen Punkts des Punktgitters;
- Einpassen einer gewölbten Funktion an die zweite Punktwolke; und
- Bestimmen der zweiten Korrekturwerte basierend auf einer Wölbung der gewölbten Funktion.

Wie zuvor bereits beschrieben, wird jeder Punkt des Punktgitters mittels einer Mehrzahl von Bildpunkten eines erfassten Bildes abgebildet. Die Tiefenwerte jedes einzelnen Punkts können nach dem Erzeugen der Tiefenkarte des Punktgitters segmentiert werden. Dabei werden zunächst die Punkte der Tiefenkarte bestimmt, die jeweils einem Punkt des Punktgitters zugeordnet sind und diesen abbilden. Dann werden die entsprechenden Tiefenwerte gemittelt, um einen gemittelten Tiefenwert für jeden Punkt des Punktgitters zu bestimmen. Durch das Mitteln der Tiefenwerte wird der Einfluss eines Astigmatismus-Fehlers auf die Tiefenwerte entfernt. Die gemittelten Tiefenwerte werden dann verwendet um die zweite Punktwolke zu erzeugen. Dann wird eine gewölbte Funktion durch die zweite Punktwolke eingepasst. Die gewölbte Funktion kann eine konvexe oder eine konkave Funktion sein. Die gewölbte Funktion ist vorzugsweise eine polynomische Funktion, bei der die Tiefenwerte als Funktion der X-Werte in X-Richtung und Y-Werte in Y-Richtung definiert sind. Die gewölbte Funktion hat vorzugsweise in der Mitte des erfassten Bereichs, insbesondere im Mittelpunkt der Tiefenkarte, ein Extremum, insbesondere ein Maximum. Mit anderen Worten wölbt sich die Funktion ausgehend von dem Mittelpunkt nach außen. Von dieser Funktion kann dann die Wölbung bestimmt werden. Für jeden Punkt der Tiefenkarte wird dann der zweite Korrekturwert auf Basis der Wölbung bestimmt. Insbesondere werden die zweiten Korrekturwerte derart bestimmt, dass sie eine Wölbung der Tiefenkarte um ihren Mittelpunkt kompensieren. Die zweiten Korrekturwerte korrigieren somit die Wölbung der Abbildung eines Objekts mittels des optischen Sensors.

Insbesondere können vor der Bestimmung der zweiten Korrekturwerte die Tiefenwerte der Tiefenkarte mittels der ersten Korrekturwerte korrigiert werden, um die Verkippung vor dem Bestimmen des zweiten Korrekturwerts herauszurechnen. Die gemittelten Tiefenwerte, die zur Erzeugung der zweiten Punktwolke dienen, können dann basierend auf den korrigierten Tiefenwerten der entsprechenden Punkte des Punktgitters bestimmt werden.

Alternativ oder zusätzlich kann das Bestimmen der dritten und vierten Korrekturwerte die folgenden Schritte aufweisen:

- Bestimmen des dritten Korrekturwerts und des vierten Korrekturwerts für jeden Punkt des Punktgitters basierend auf einer Kostenfunktion zwischen einem Astigmatismus-Modell und den Tiefenwerten des jeweiligen Punkts; und
- Interpolieren der dritten und vierten Korrekturwerte basierend auf den dritten und vierten Korrekturwerten jedes Punkts des Punktgitters.

Wie zuvor bereits beschrieben, wird jeder Punkt des Punktgitters mittels einer Mehrzahl von Bildpunkten eines erfassten Bildes abgebildet. Die Tiefenwerte jedes einzelnen Punkts können nach dem Erzeugen der Tiefenkarte des Punktgitters segmentiert werden. Dabei werden zunächst die Punkte der Tiefenkarte bestimmt, die jeweils einem Punkt des Punktgitters zugeordnet sind und diesen abbilden. Wie zuvor bereits beschrieben ist das Astigmatismus-Modell eine Anpassung der über den Kreisazimuth dargestellten Tiefenkartenabweichung. Die angepasste Fitfunktion, beschrieben durch die Fit-Parameter, entsprechen dem dritten Korrekturwert und dem vierten Korrekturwert des jeweiligen Punkts des Punktgitters. Insbesondere kann das Astigmatismus-Modell eine Linearkombination aus zwei radial-symmetrischen Sinus-Funktionen sein. Die Kostenfunktion wird dann nach den Koeffizienten der Sinus-Funktionen minimiert. Die Koeffizienten der Sinus-Funktionen entsprechen dem dritten Korrekturwert und dem vierten Korrekturwert des jeweiligen Punkts des Punktgitters. Ausgehend von den bestimmten dritten und vierten Korrekturwerten für jeden Punkt des Punktgitters werden die dritten und vierten Korrekturwerte für jeden Punkt der Tiefenkarte durch Interpolation basierend auf den dritten und vierten Korrekturwerten jedes Punkts des Punktgitters bestimmt.

Insbesondere können vor dem Bestimmen der dritten und vierten Korrekturwerte die Tiefenwerte mittels der ersten und zweiten Korrekturwerte korrigiert werden, um vor der Bestimmung der der dritten und vierten Korrekturwerte einen Kippfehler und einen Bildfeldwölbungs-Fehler herauszurechnen. Der verbleibende Fehler in den korrigierten Tiefenwerten entspricht dann weitestgehend dem Astigmatismus-Fehler. Basierend auf den korrigierten Tiefenwerten der entsprechenden Punkte des Punktgitters kann dann für jeden Punkt des Punktgitters ein dritter und vierter Korrekturwert bestimmt werden.

Jegliche der beschriebenen Korrekturen des optischen Fehlers und insbesondere die Astigmatismuskorrektur verbessert die bereits erwähnte Autofokusfunktion bezüglich eines Oberflächenbereichs des Werkstücks, der durch eine Mehrzahl von Teilbereichen des Fokalbildstapels erfasst wird und demnach dieser Mehrzahl von Teilbereichen entspricht.

Alternativ oder zusätzlich kann das Verfahren des Weiteren den folgenden Schritt aufweisen: Ausgeben der Tiefenwerte und insbesondere einer entsprechenden Tiefenkarte mittels einer Ausgabeeinrichtung.

Die Ausgabeeinrichtung kann beispielsweise ein Display aufweisen, wobei die Tiefenkarte auf dem Display dargestellt werden kann. Alternativ oder zusätzlich kann die Ausgabeeinrichtung dazu ausgebildet sein, die Tiefenkarte an eine elektronische Speichereinrichtung, an eine weitere Vorrichtung oder an ein externes Display auszugeben. Die elektronische Speichereinrichtung kann beispielsweise ein Speichermedium, insbesondere eine Festplatte, ein Flash-Speicher oder eine Cloud sein. Die weitere Vorrichtung kann beispielsweise die Tiefenkarte verwenden, um weitere Prozesse durchzuführen. Das externe Display kann beispielsweise dazu ausgebildet sein, die Tiefenkarte darzustellen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Ansicht eines Messgeräts,
Fig. 2 eine Darstellung eines Verfahrens zum Bestimmen von Tiefenwerten eines Oberflächenbereichs eines Werkstücks,
Fig. 3 eine Darstellung eines Verfahrens zum Vermessen einer Oberfläche eines Werkstücks,
Fig. 4 eine Darstellung von Verfahrensschritten zur Bestimmung von Korrekturwerten,
Fig. 5 ein Diagramm zur Darstellung des Einpassens einer Funktion an bestimmte Fokuswerte entlang der Tiefenrichtung,
Fig. 6 eine Beispiel-Ansicht eines Kalibrationsobjekts,
Fig. 7 Ansichten von segmentierten Tiefenwerten von Punkten des Punktgitters,
Fig. 8 ein Diagramm einer ersten Punktwolke,
Fig. 9 ein Diagramm einer eingepassten Ebene an die erste Punktwolke,
Fig. 10 ein Diagramm einer zweiten Punktwolke,
Fig. 11 eine Darstellung einer an die zweite Punktwolke angepassten, gewölbten Funktion,
Fig. 12 eine Ansicht zur Darstellung eines Beispiels von Astigmatismus,
Fig. 13 verschiedene Ansichten von Punkten des Punktgitters zur Veranschaulichung der Schritte des Bestimmens der Korrekturwerte,
Fig. 14 eine Ansicht einer USAF-Auflösungstesttafel,
Fig. 15 eine erste Ansicht einer Tiefenkarte einer USAF-Auflösungstesttafel,
Fig. 16 eine Ansicht einer Darstellung der Bildgradienten der USAF-Auflösungstesttafel,
Fig. 17 eine Ansicht einer Darstellung einer Winkelkarte der USAF-Auflösungstesttafel,
Fig. 18 eine erste Ansicht einer korrigierten Winkelkarte der USAF-Auflösungstesttafel,
Fig. 19 eine zweite Ansicht der Tiefenkarte einer USAF-Auflösungstesttafel und
Fig. 20 eine zweite Ansicht einer korrigierten Winkelkarte der USAF-Auflösungstesttafel.

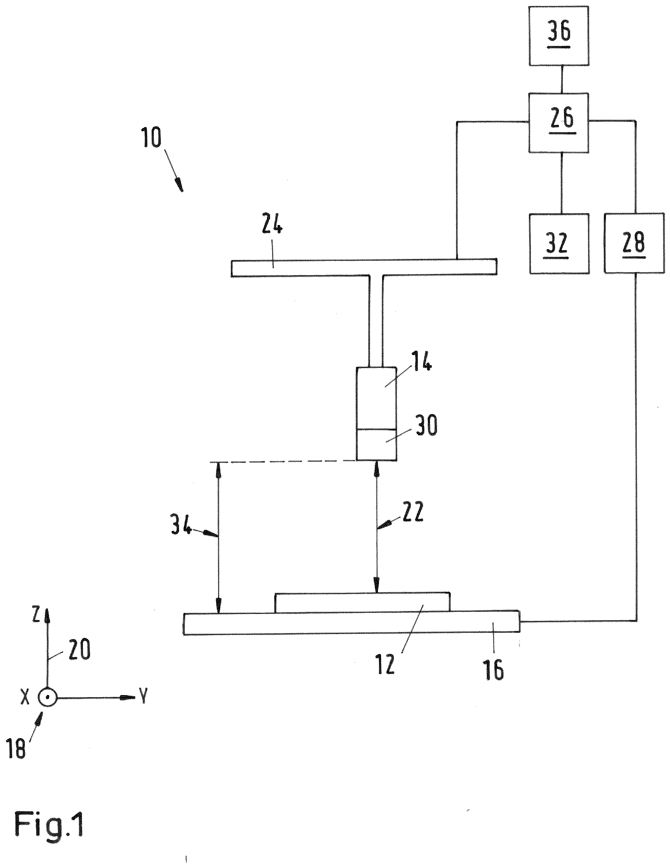

Fig. 1 zeigt ein Messgerät 10. Das Messgerät kann ein Mikroskop oder ein Koordinatenmessgerät sein. Das Messgerät 10 dient zum Vermessen eines Werkstücks 12. Hierzu weist das Messgerät 10 einen optischen Sensor 14 auf. In Ergänzung zu dem optischen Sensor 14 können optional noch weitere Sensoren vorgesehen sein, beispielsweise taktile Sensoren. Der optische Sensor 14 kann ein optisches System 30 und einen Bildsensor aufweisen. Das optische System 30 bildet einen Bereich der Oberfläche des Werkstücks 12 auf den Bildsensor ab. Der optische Sensor 14 kann mittels des Bildsensors ein Bild des Bereichs der Oberfläche des Werkstücks 12 erfassen.

Des Weiteren kann das Messgerät 10 eine Beleuchtungseinrichtung 32 aufweisen. Die Beleuchtungseinrichtung ist dazu ausgebildet, zumindest den Bereich der Oberfläche des Werkstücks 12 zu beleuchten.

Das zu vermessende Werkstück 12 ist auf einem Werkstückhalter 16 angeordnet. Der Werkstückhalter 16 kann z. B. ein Messtisch, ein Werktisch oder ein Objekttisch sein. In der dargestellten Ansicht ist der Werkstückhalter 16 in einer X-Y-Ebene eines Koordinatensystems 18 ausgerichtet. Senkrecht zu dem Werkstückhalter 16 erstreckt sich eine Z-Richtung 20. Die Z-Richtung 20 ist eine Tiefenrichtung. Ein Abstand zwischen dem optischen Sensor 14 und dem Werkstück 12 in der Tiefenrichtung 20 ist mit einem Bezugszeichen 22 gekennzeichnet. Ein Abstand zwischen dem optischen Sensor 14 und dem Werkstückhalter 16 in der Tiefenrichtung 20 ist mit einem Bezugszeichen 34 gekennzeichnet. Der optische Sensor 14 und der Werkstückhalter 16 sind relativ zueinander bewegbar. Auf diese Weise kann der Abstand 34 verändert werden. Da das Werkstück 12 auf dem Werkstückhalter 16 angeordnet ist, ändert sich der Abstand 22 entsprechend dem Abstand 34. Grundsätzlich kann hierzu vorgesehen sein, dass der Werkstückhalter 16 in der Tiefenrichtung 20 bewegbar ist und/oder der optische Sensor 14, beispielsweise mittels einer geeigneten Mechanik 24, in der Tiefenrichtung 20 bewegbar ist.

Das Messgerät 10 kann des Weiteren eine Antriebseinrichtung 28 aufweisen. Die Antriebseinrichtung 28 ist dazu ausgebildet, den Werkstückhalter 16 und den optischen Sensor 14 relativ zueinander in der Tiefenrichtung 20 zu bewegen. Vorzugsweise ist die Antriebseinrichtung 28 dazu ausgebildet, den Werkstückhalter 16 relativ zu dem optischen Sensor 14 in der Tiefenrichtung 20 zu bewegen. Alternativ kann die Antriebseinrichtung 28 auch dazu ausgebildet sein, den optischen Sensor 14 relativ zu dem Werkstückhalter 16 in der Tiefenrichtung 20 zu bewegen. Selbstverständlich kann die Antriebseinrichtung 28 auch dazu ausgebildet sein, sowohl den optische Sensor 14 als auch den Werkstückhalter 16 in der Tiefenrichtung 20 zu bewegen.

Das Messgerät 10 weist des Weiteren eine Steuereinrichtung 26 auf. Die Steuereinrichtung 26 ist dazu eingerichtet, die einzelnen Komponenten des Messgeräts zu steuern und Daten zu verarbeiten. Die Steuereinrichtung 26 kann dazu beispielsweise verschiedene Untereinheiten aufweisen, die jeweils eine Steuerung einer Komponente und/oder eine Verarbeitung von Daten durchführen. Beispielsweise kann die Steuereinrichtung 26 eine Regelungseinheit aufweisen, die die Antriebseinrichtung 28, den optischen Sensor 14 und/oder die Beleuchtungseinrichtung 32 steuert und/oder regelt. Des Weiteren kann die Steuereinrichtung 26 als Recheneinrichtung eine Datenverarbeitungseinheit aufweisen, die dazu eingerichtet ist, die Auswertung von erfassten Bildern des optischen Sensors durchzuführen. Die Datenverarbeitungseinheit kann beispielsweise auf Basis einer Mehrzahl von Bildern, die einen Fokalbildstapel bilden, eine Tiefenkarte und/oder ein EDOF Bild des Werkstücks 12 erzeugen.

Die Steuereinrichtung 26 kann mit einem nichtflüchtigen Datenspeicher, in dem ein Computerprogramm gespeichert ist, verbunden sein oder diesen aufweisen. Bei manchen Ausführungsbeispielen ist die Steuereinrichtung 26 ein Mehrzweckcomputer, wie etwa ein handelsüblicher Personal Computer, der unter einem handelsüblichen Betriebssystem läuft, und das Computerprogramm aus dem Speicher weist einen Programmcode auf, der zum Ausführen von Ausführungsformen des in dieser Beschreibung beschriebenen Verfahrens in Kombination dem optischen Sensor 14 und der Antriebseinrichtung 28 gestaltet und ausgebildet ist. Bei einem alternativen Ausführungsbeispiel ist die Steuereinrichtung 26 ein logischer Schaltkreis, wie etwa ein vor Ort programmierbares Gate-Array (FPGA: Field Programmable Gate Array), ein anwendungsspezifischer integrierter Schaltkreis (ASIC: Application-Specific Integrated Circuit), ein Mikrocontroller oder ein beliebiger anderer angemessener programmierbarer elektrischer Schaltkreis. Darin können die Ausführungsformen des Verfahrens, insbesondere Steuer- und Bestimmungsschritte, mit dem logischen Schaltkreis ausgeführt werden, sodass der logische Schaltkreis zum Ausführen von Ausführungsformen des neuen Verfahrens in Kombination mit dem optischen Sensor 14 und der Antriebseinrichtung 28 gestaltet und ausgebildet ist. Zum Implementieren von Ausführungsformen des neuen Verfahrens in dem logischen Schaltkreis kann eine beliebige angemessene Programmiersprache oder Hardwarebeschreibungssprache verwendet werden, wie etwa C, VHDL und Weiterentwicklungen davon.

Des Weiteren kann das Messgerät 10 eine Ausgabeeinrichtung 36 aufweisen. Die Ausgabeeinrichtung 36 ist dazu eingerichtet, die Tiefenkarte und/oder das EDOF Bild des Werkstücks 12 auszugeben. Die Ausgabeeinrichtung 36 kann beispielsweise ein Display aufweisen, auf dem die Tiefenkarte und/oder das EDOF Bild des Werkstücks 12 dargestellt werden kann. Alternativ oder zusätzlich kann die Ausgabeeinrichtung 36 dazu ausgebildet sein, die Tiefenkarte und/oder das EDOF Bild des Werkstücks 12 an eine elektronische Speichereinrichtung, an eine weitere Vorrichtung oder an ein externes Display auszugeben.

Darüber hinaus kann das Messgerät 10 auch ein Eingabegerät aufweisen, mit dem ein Nutzer beispielsweise die Anzahl und Abstände bzw. Schrittweite der zu erfassenden Bilder in das Koordinatenmessgerät 10 eingeben kann oder den optischen Sensor 14 manuell bewegen kann.

Bevor das Werkstück vermessen wird, kann vorgesehen sein, dass ein Nutzer die Anzahl der zu erfassenden Bilder sowie die Schrittweite oder Abstände 22, in der die Bilder erfasst werden sollen, eingibt. Alternativ kann die Anzahl der zu erfassenden Bilder sowie die Schrittweite oder Abstände 22, in der die Bilder erfasst werden sollen, vordefiniert bzw. fest vorgegeben sein. Zum Vermessen des Werkstücks 12 steuert die Steuereinrichtung 26 dann die Antriebseinrichtung 28 derart, dass der Abstand 22 zwischen dem Werkstück 12 und dem optischen Sensor 14 entsprechend der Voreinstellung verändert wird. Gleichzeitig steuert die Steuereinrichtung 26 den optischen Sensor 14 derart, dass eine Mehrzahl von Bildern des Bereichs der Oberfläche des Werkstücks 12 entsprechend der Voreinstellung erfasst wird, während der Abstand 22 verändert wird. Jedes Bild wird dabei mit einem anderen Abstand 22 zu dem Werkstück 12 erfasst. Die Mehrzahl von Bildern bildet dann einen Fokalbildstapel. Der Fokalbildstapel wird dann von der Steuereinrichtung 26 ausgewertet, um die Tiefenkarte des Bereichs der Oberfläche des Werkstücks 12 zu erzeugen. Auf Basis der Tiefenkarte und den Bildern des Fokalbildstapels kann ein EDOF Bild erzeugt werden.

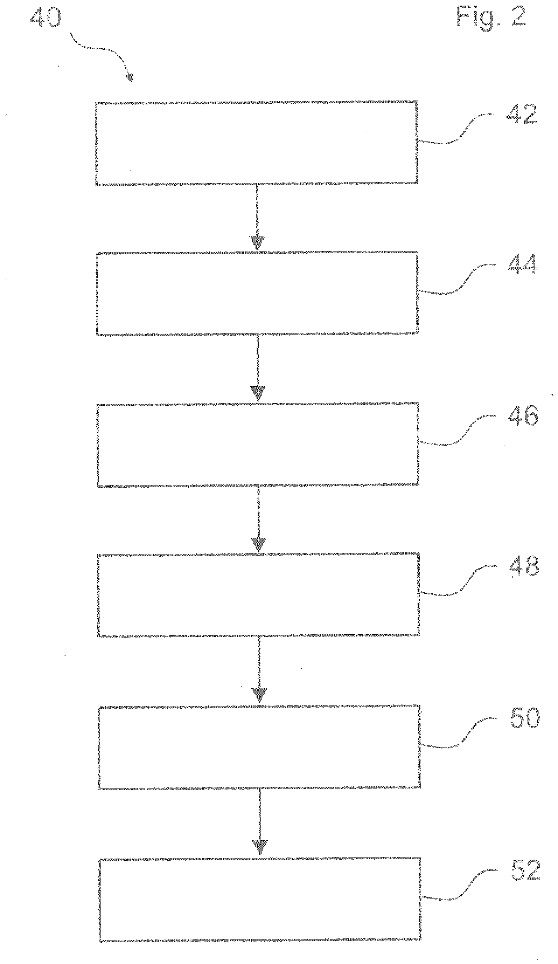

Fig. 2 stellt einen Ablauf von Schritten eines computerimplementierten Verfahrens 40 zum Bestimmen von Tiefenwerten und insbesondere zum Erzeugen einer Tiefenkarte eines Oberflächenbereichs eines Werkstücks dar, insbesondere des Werkstücks 12 aus Fig. 1. Das Verfahren kann beispielsweise mittels der Steuereinrichtung 26 aus Fig. 1 durchgeführt werden.

In einem ersten Schritt 42 des Verfahrens 40 wird ein Fokalbildstapel empfangen. Der Fokalbildstapel weist eine Mehrzahl von Bildern des Werkstücks 12 auf, wobei die Bilder den Oberflächenbereich der Oberfläche des Werkstücks 12 mit in einer Tiefenrichtung unterschiedlichen Fokalebenenpositionen (z. B. Abstand 22) als Bildbereich des Bildes abbilden, wobei jedem Bild des Fokalbildstapels eine der Fokalebenenpositionen zugeordnet ist. Bildpunkte der Bilder sind jeweils einem entsprechenden Objektpunkt auf der Oberfläche des Werkstücks 12 zugeordnet.

Vorzugsweise bilden die Bilder jeweils den Oberflächenbereich des Werkstücks 12 aus unterschiedlichen, definierten Abständen 22 zu dem Werkstück 12 in der Tiefenrichtung 20 ab. Jedem Bild des Fokalbildstapels ist dabei ein Abstand 22 zugeordnet. Da die Bilder in unterschiedlichen Abständen 22 zu dem Werkstück 12 in der Tiefenrichtung 20 erfasst werden, ist jedem Bild des Fokalbildstapels ein Tiefenwert in der Tiefenrichtung 20 zugeordnet. Insbesondere folgen die Tiefenwerte der Bilder in diskreten Schritten aufeinander.

Alternativ bilden die Bilder jeweils den Oberflächenbereich des Werkstücks 12 mit unterschiedlichen, definierten Fokusstellungen, sprich unterschiedlichen Fokalbildebenen, ab. Dabei kann jeder Fokusstellung bzw. Einstellung des Fokusabstands des Objektivs des optischen Sensors ein Tiefenwert in der Tiefenrichtung 20 zugeordnet sein, der dem Abstand zu der Fokalebene in der jeweiligen Fokusstellung bzw. Einstellung entspricht. Der Abstand des optischen Sensors 14 zu dem Werkstück 12 kann dabei z. B. konstant bleiben.

In einem weiteren, folgenden Schritt 44 des Verfahrens 40 wird ein Bildschärfenwert für eine Mehrzahl von Teilbereichen des Bildbereichs jedes Bildes des Fokalbildstapels bestimmt. Z. B. wird der Gradient der Helligkeit, eines Grau-Werts oder eines Kontrastwerts zu umgebenden Bildpunkten des jeweiligen Teilbereichs bestimmt und zwar für jedes Bild des Fokalbildstapels. Da jeder der Teilbereiche zumindest einen Bildpunkt aufweist, wird zumindest ein Bildschärfenwert für jeden Teilbereich in jedem Bild des Fokalbildstapels ermittelt. Wenn ein Teilbereich mehr als einen Bildpunkt aufweist, dann kann der Bildschärfenwert für einen einzigen Bildpunkt des Teilbereichs oder für mehrere Bildpunkte des Teilbereichs bestimmt werden. In letzterem Fall kann aus den mehreren ermittelten Bildschärfenwerten ein repräsentativer Bildschärfenwert für den Teilbereich ermittelt werden, zum Beispiel durch Bildung eines Mittelwertes oder Durchschnittswertes.

Es muss aber nicht für alle Teilbereiche des Bildes, d. h. nicht für jeden Teil des abgebildeten Oberflächenbereichs, ein Bildschärfenwert bestimmt werden. Insbesondere können zunächst Teilbereiche ausgewählt werden und/oder es sind Teilbereiche vorgegeben, für die die Bildschärfenwerte bestimmt werden sollen. Dabei werden jeweils für alle Bildbereiche, die denselben, gemeinsamen Teilbereich des Oberflächenbereichs abbilden, Bildschärfenwerte bestimmt.

Nach der Bestimmung der Bildschärfenwerte liegen diese für eine Mehrzahl von Teilbereichen der Bilder des Fokalbildstapels vor. Da jedem Bild ein Tiefenwert in der Tiefenrichtung 20 zugeordnet ist, ist für allen verschiedenen Teilbereichen, für die ein Bildschärfenwert bestimmt wurde und die Teilbereiche desselben Bildes des Fokalbildstapels sind, auch derselbe Tiefenwert zugeordnet.

Vorzugsweise sind die verschiedenen Teilbereiche, d. h. die Teilbereiche, die unterschiedliche Teile des abgebildeten Oberflächenbereichs abbilden, alle gleich groß und gleich geformt. Zum Beispiel haben sie alle die Größe eines Pixels (d. h. Bildpunkts) oder die Größe und Form einer bestimmten Anzahl von Pixeln, beispielsweise die quadratische oder rechteckige Form mit einer Länge von n Pixeln und einer Breite von m Pixeln, wobei n, m ganze natürliche Zahlen sind. Es ist aber auch möglich, dass die Form der Teilbereiche nicht rechteckig ist. In diesem Fall wird es aber bevorzugt, dass benachbarte Teilbereiche lückenlos aneinander angrenzen.

Ferner wird in dem folgenden Schritt 46 für jeden der Mehrzahl von Teilbereichen, für den ein Bildschärfenwert ermittelt wurde, ein Modell eines Verlaufs der von der Fokalebenenposition in der Tiefenrichtung abhängigen Bildschärfenwerte an die Bildschärfenwerte jeweils derjenigen Teilbereiche angepasst, die einen Stapel von Bild-Teilbereichen bilden, weil sie einem gemeinsamen Teilbereich des Oberflächenbereichs entsprechen. Z. B. wird eine Funktion entlang der Tiefenrichtung 20 an die Bildschärfenwerte derjenigen Bildbereiche angepasst, die einem gemeinsamen Teilbereich des abgebildeten Oberflächenbereichs entsprechen. Die Funktion beschreibt eine Zuordnung, bei der jedem Tiefenwert in der Tiefenrichtung ein entsprechender Bildschärfenwert zugeordnet ist. Auf Beispiele für Funktionen wurde bereits eingegangen, zum Beispiel Verteilungsdichtefunktion einer Normalverteilung oder parabolische Funktion. Vorzugsweise ist die Funktion achsensymmetrisch bezüglich eines Maximums, an dem die Bildschärfe maximal ist.

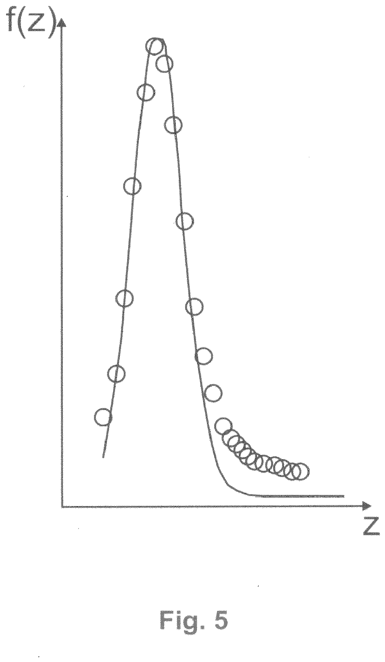

In Fig. 5 ist exemplarisch ein Diagramm dargestellt, in dem die Bildschärfenwerte der Teilbereiche entlang der Tiefenrichtung 20 (der Z-Richtung) aufgetragen sind und eine Fit-Funktion an diese Fokuswerte angepasst ist.

Grundsätzlich lässt sich z. B. die Verteilungsdichtefunktion einer Normalverteilung durch die Gleichung (1) beschreiben:

$$f(Z) = k \exp(\frac{-(Z-\mu)^2}{2\sigma^2})\,(1)$$

Hierbei sind k die Amplitude, $\mu$ der Erwartungswert und $\sigma$ die Standardabweichung der Normalverteilung. Z ist ein Tiefenwert in der Tiefenrichtung 20. F(Z) stellt somit den entsprechenden Schärfenwert zu dem jeweiligen Tiefenwert dar.

Der natürliche Logarithmus von Gleichung (1) ist in Gleichung (2) dargestellt. Gleichung (2) lässt sich in linearisierter Form mittels linearisierter Parameter a, b und c darstellen. Die linearisierte Form ist in Gleichung (3) dargestellt.

$$\mathrm{Ln}\, f(Z) = \ln k + \frac{-(Z-\mu)^2}{2\sigma^2} \qquad (2)$$

$$\ln f(Z) = \mathrm{a} + \mathrm{b}\, Z + \mathrm{c}\, Z^2 \qquad (3)$$

Die Abhängigkeiten der linearisierten Parameter a, b und c von dem Erwartungswert $\mu$, der Standardabweichung $\sigma$ und der Amplitude k sind in den Gleichungen (4) - (6) definiert.

$$a = \ln k - \frac{\mu^2}{2\sigma^2} \qquad (4)$$

$$b = \frac{\mu}{\sigma^2} \qquad (5)$$

$$c = -\frac{1}{2\sigma^2} \qquad (6)$$

Zur Bestimmung der Parameter a, b, c ausgehend von der linearisierten Gleichung auf Basis der Tiefenwerte Z und Bildschärfenwerte f(Z) der Bildpunkte des jeweiligen Objektpunkts kann die Methode der kleinsten Quadrate angewandt werden. Daraus ergibt sich das lineare Gleichungssystem der Gleichung (7) mit den Variablen A, x und B, die in den Gleichungen (8) - (10) definiert sind.

$$A\,x = B \qquad (7)$$

$$A = \begin{bmatrix} N & \Sigma\,Z & \Sigma\,Z^2 \\ \Sigma\,Z & \Sigma\,Z^2 & \Sigma\,Z^3 \\ \Sigma\,Z^2 & \Sigma\,Z^3 & \Sigma\,Z^4 \end{bmatrix} \qquad (8)$$

$$B = \begin{bmatrix} \Sigma \ln f(Z) \\ \Sigma\,Z \ln f(Z) \\ \Sigma\,Z^2 \ln f(Z) \end{bmatrix} \qquad (9)$$

$$x = \begin{bmatrix} a \\ b \\ c \end{bmatrix} \qquad (10)$$

x ist ein Vektor, der die linearisierten Parameter a, b, c der Normalverteilung aufweist. A ist eine 3x3 Matrix, die die Koeffizienten des Gleichungssystems angibt. B ist ein Vektor, der die Lösungen des Gleichungssystems aufweist. N ist die Anzahl der Bildpunkte, an die die Funktion angepasst wird. Diese Anzahl entspricht der Anzahl der Bilder. Die Z-Werte sind die Tiefenwerte dieser Bildpunkte. Wie zuvor bereits beschrieben, entspricht der Tiefenwert eines Bildpunkts eines Bildes dem Tiefenwert des Bildes. Die Funktionswerte f(Z) sind die Fokuswerte dieser Bildpunkte. Das Summenzeichen $\Sigma$ in der Matrix A und dem Vektor B bedeutet, dass über alle Bildbereiche summiert wird.

Die Matrix A hängt somit nur von den Tiefenwerten Z der Bilder des Fokalbildstapels sowie von der Anzahl N der Bilder des Fokalbildstapels ab. Die Matrix A ist somit für jeden Teil des Oberflächenbereichs des Werkstücks 12 gleich. Lediglich der Lösungsvektor B unterscheidet sich innerhalb des Oberflächenbereichs, da der Lösungsvektor B zusätzlich auch von dem jeweiligen Bildschärfenwert f(Z) des Teilbereichs abhängt.

Die linearisierten Parameter a, b und c der Normalverteilung lassen sich über das Gleichungssystem der Gleichung (7) bestimmen. Der Erwartungswert $\mu$, die Standardabweichung $\sigma$ und die Amplitude k der Normalverteilung lassen sich dann mittels der folgenden Gleichungen (11) - (13) auf Basis der linearisierten Parameter bestimmen.

$$\mu = \frac{-b}{2c} \qquad (11)$$

$$\sigma = \sqrt{\frac{-1}{2c}} \qquad (12)$$

$$k = \exp\left(a - \frac{b^2}{4c}\right) \qquad (13)$$

Durch Bildung der Inversen $A^{-1}$ der Matrix A können die linearisierten Parameter a, b und c gemäß der Gleichung (14) bestimmt werden.

$$X = A^{-1}B \qquad (14)$$

Wie eingangs bereits beschrieben, haben derzeitige optische Sensoren Auflösungen von mehreren Megapixel, wobei die Anzahl der Bildpunkte jedes erfassten Bildes und entsprechend auch die Anzahl der abgebildeten Objektpunkte der Anzahl der Pixel des optischen Sensors entspricht. Daraus ergeben sich mehrere Millionen Bildpunkte bzw. Objektpunkte. Die Anzahl der Stapel der Teilbereiche, für die Bildschärfe ermittelt wird, wird im Folgenden mit M bezeichnet. Da das Anpassen eines Modells eines Verlaufs der von der Fokalebenenposition in der Tiefenrichtung abhängigen Bildschärfenwerte an die Bildschärfenwerte jeweils der Teilbereiche vorzugsweise für wenige Bildpunkte oder einen einzigen Bildpunkt pro Bildbereich durchgeführt wird, ist dies eine rechenintensive Aufgabe. Zur Vereinfachung der Berechnung kann eine schwachbesetzte Blockmatrix erzeugt werden, die eine 3Mx3M Matrix ist. Die Blockmatrix $A_{Block}$ ist in Gleichung (15) definiert.

$$A_{Block} = \begin{bmatrix} A_{1,1} & \cdots & 0 \\ \vdots & \ddots & \vdots \\ 0 & \cdots & A_{x,y} \end{bmatrix} = \begin{bmatrix} A_1 & \cdots & 0 \\ \vdots & \ddots & \vdots \\ 0 & \cdots & A_M \end{bmatrix} \qquad (15)$$

Jeder 3x3 Block entlang der Diagonalen enthält eine 3x3 Matrix A, die das lineare Gleichungssystem für jeweils einen Stapel von Bild-Teilbereichen bzw. den zugehörigen abgebildeten Teil des Oberflächenbereichs beschreibt. Durch einmaliges Invertieren der Blockmatrix $A_{Block}$ können die Parameter für jeden auszuwertenden Teil des Oberflächenbereichs des Werkstücks 12 in recheneffizienter Weise bestimmt werden.

In einem weiteren, folgenden Schritt 48 des Verfahrens 40 (siehe Fig. 2) wird für die Stapel von Bild-Teilbereichen ein Qualitätsmaß einer Qualität der Anpassung des Modells an die Bildschärfenwerte bestimmt. Wie bereits erwähnt, kann das Qualitätsmaß Q z. B. durch die Bestimmung der Residuen der angepassten mathematischen Funktion und Bildung der Norm ermittelt werden:

$$Q = \left\| f(Z) - f'(Z) \right\| =$$

$$\sqrt{\left(f(Z_1) - f'(Z_1)\right)^2 + \left(f(Z_2) - f'(Z_2)\right)^2 + \cdots + \left(f(Z_N) - f'(Z_N)\right)^2} \qquad (16)$$

Dabei ist $f(Z)$ die Funktion, die den einzelnen Bildern des Bildstapels den ermittelten Bildschärfenwert zuordnet. Diese Funktion ist somit z. B. für die diskreten Tiefenwerte $Z_1, Z_2, \ldots Z_N$ der einzelnen Bilder definiert. Alternativ ist die Funktion f z. B. für die Indizes der Bilder definiert. Dabei ist N die Anzahl der Bilder des Bildstapels. $F'(Z)$ ist die an den Verlauf der Funktion $f(Z)$ angepasste Funktion. Gleichung (16) drückt daher aus, dass die Residuen an den Stellen der angepassten Funktion $f'(Z)$ gebildet werden, an denen die Funktion $f(Z)$ definiert ist. Optional kann der Ausdruck auf der rechten Seite der Gleichung (16) normiert werden, indem das Argument der Quadratwurzel durch die Summe der Quadrate der Funktionswerte der Funktion $f(Z)$ dividiert wird, d.h. durch

$$\sum_{i=1}^{N} (f_i(Z))^2.$$

In einem weiteren, folgenden Schritt 50 des Verfahrens 40 werden etwaig vorhandene Stapel von Bild-Teilbereichen ausgesondert, für die das bestimmte Qualitätsmaß ein Qualitätskriterium nicht erfüllt. Zum Beispiel wird für das zu bestimmende Qualitätsmaß Q ein Grenzwert vorgegeben. Der Grenzwert kann zum Beispiel ermittelt werden, indem für ein Werkstück mit einem bekannten Tiefenprofil (zum Beispiel einer bekannten Tiefenkarte) das Verfahren gemäß Fig. 2 mit den Schritten 42 bis 48 ausgeführt wird. Dabei hat das bekannte Tiefenprofil Extremwerte, die in dem Bereich von Tiefenwerten des Fokalbildstapels nicht enthalten sind. Teilbereiche, die Teilen des Oberflächenbereichs mit den Extremwerten entsprechen, führen daher zu höheren Werten des Qualitätsmaßes Q als Teilbereichen, die Teilen des Oberflächenbereichs mit Tiefenwerten innerhalb des Tiefenbereichs des Fokalbildstapels entsprechen. Der Grenzwert kann nun so festgelegt werden, dass die Teilbereiche, die Teilen des Oberflächenbereichs mit den Extremwerten entsprechen, ausgesondert werden, wenn das Qualitätskriterium angewendet wird.

In einem weiteren, folgenden Schritt 52 des Verfahrens 40 werden Tiefenwerte für jeden der Stapel von Bild-Teilbereichen bestimmt, für die das bestimmte Qualitätsmaß das vorgegebene Qualitätskriterium erfüllt. Bezogen auf das oben ausgeführte Beispiel bedeutet das Qualitätskriterium zum Beispiel, dass das Qualitätsmaß des Stapels von Teilbereichen unterhalb des Grenzwertes liegt. Der Tiefenwert entspricht demnach einer größten Bildschärfe für den Stapel von Bild-Teilbereichen ist ein Maß für eine Tiefenposition des gemeinsamen Teilbereichs des Oberflächenbereichs.

Insbesondere kann eine Tiefenkarte des Oberflächenbereichs des Werkstücks 12 basierend auf den bestimmten Tiefenwerten erzeugt und ausgegeben werden. Auf Basis der erzeugten Tiefenkarte und der Bilder des Fokalbildstapels kann dann zum Beispiel ein EDOF Bild erzeugt werden.

In einem weiteren Schritt (nicht in Fig. 2 dargestellt) des Verfahrens 40 wird mindestens ein Abbildungsfehler der Bilder des Fokalbildstapels in der Tiefenkarte korrigiert. Beispielsweise kann ein Kippfehler, ein Bildfeldwölbung-Fehler und ein Astigmatismus-Fehler korrigiert werden. Dazu werden gemäß der hier beschriebenen Ausgestaltung die Tiefenwerte der Tiefenkarte vor dem Bestimmen der Tiefenwerte oder nach dem Bestimmen der Tiefenwerte in Schritt 52 korrigiert.

Z. B. zum Korrigieren des Kippfehlers ist jedem Punkt oder Teilbereich der Bilder des Bildstapels und somit des abgebildeten Oberflächenbereichs des Werkstücks ein erster Korrekturwert zugeordnet, wobei der Tiefenwert jedes Punkts der Tiefenkarte mittels des entsprechenden ersten Korrekturwerts korrigiert wird. Die Korrektur des jeweiligen Tiefenwerts erfolgt durch Subtraktion des entsprechenden ersten Korrekturwerts von dem jeweiligen Tiefenwert. Der erste Korrekturwert kann vorberechnet werden oder vorbestimmt sein.

Generell, nicht nur in Bezug auf den ersten Korrekturwert, gilt vorzugsweise, dass der jeweilige Korrekturwert in Bezug auf die Bilddaten oder den bildgebenden Sensor definiert ist, denn die Bilddaten und der Sensor sind eindeutig dem optischen System zugeordnet, das den Abbildungsfehler erzeugt. Zum Beispiel kann daher ein Koordinatensystem des Sensors (zum Beispiel der 2D-Kamera) definiert sein, für dessen Koordinaten die Korrekturwerte vorliegen oder erzeugt werden. Dies kann z. B. das oben bereits erwähnte und unten nochmals erwähnte Punktgitter sein. Zweckmäßigerweise ist das Koordinatensystem eineindeutig der Matrix der Sensorelemente zugeordnet und somit den Pixeln der erzeugten Bilder und daher auch den Bilddaten. Zum Beispiel können die Punkte des Punktgitters auch Bildpunkte sein. Das Koordinatensystem kann insbesondere aber auch den Teilbereichen der erzeugten Bilder zugeordnet sein, für die bei Vermessung eines Werkstücks die Bildschärfenwerte und somit die Tiefenwerte zu ermitteln sind. Vorzugsweise ist für jeden dieser Teilbereiche zumindest ein Korrekturwert jedes der zu korrigierenden Abbildungsfehler vorhanden oder wird erzeugt. Für die Teilbereiche kann aber für jede Art von Korrekturwerten eine Mehrzahl von Korrekturwerten vorhanden sein oder erzeugt werden, insbesondere für verschiedene Punkte in dem Koordinatensystem, die alle innerhalb des Teilbereichs liegen. In diesem Fall kann aus den mehreren Korrekturwerten ein Gesamt-Korrekturwert für den Teilbereich ermittelt werden, Beispiel durch Bildung eines Mittelwertes oder Durchschnittswertes. Der Bezug der Korrekturwerte zu dem abgebildeten Oberflächenbereich ergibt sich aus der Zuordnung der Bilddaten bzw. des bildgebenden Sensors zu der abgebildeten Oberfläche.

Zum Korrigieren des Bildfeldwölbung-Fehlers ist jedem Punkt oder Teilbereich der Bilder des Bildstapels ein zweiter Korrekturwert zugeordnet, wobei der Tiefenwert mittels des entsprechenden zweiten Korrekturwerts korrigiert wird. Die Korrektur des jeweiligen 34 Tiefenwerts erfolgt hier durch Subtraktion des entsprechenden zweiten Korrekturwerts von dem jeweiligen Tiefenwert. Auch der zweite Korrekturwert kann vorberechnet oder vorbestimmt sein.

Die Korrektur des Astigmatismus-Fehlers ist komplexer als die Korrektur des Kippfehlers und des Bildfeldwölbung-Fehlers und lässt sich nicht einfach durch Subtraktion eines einzigen Korrekturwerts durchführen. Dies liegt daran, dass Astigmatismus von der Richtung abhängt. Mit anderen Worten ist der Astigmatismus-Fehler winkelabhängig. Dies erfordert, dass für den Bereich den abgebildeten Oberflächenbereich des Werkstücks 12 bzw. für die Bilddaten eine Winkelkarte bestimmt werden muss, auf Basis derer der Astigmatismus-Fehler korrigiert werden kann.

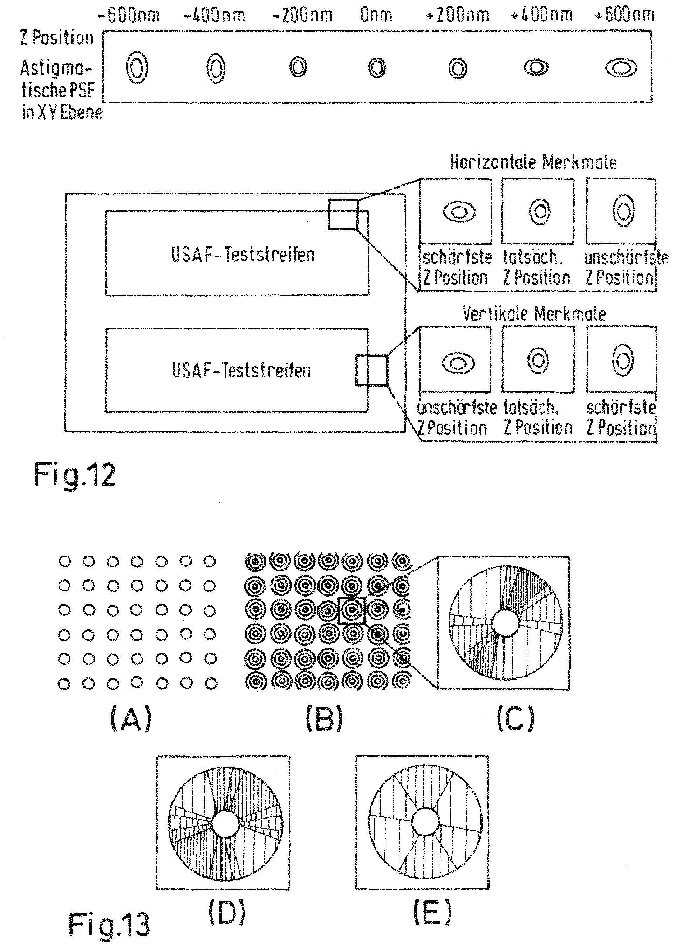

Zur Veranschaulichung der Winkelabhängigkeit wird im Folgenden die Darstellung der Fig. 12 betrachtet. Astigmatismus ist eine Aberration der "schiefen" Strahlen. Ein schief einfallendes Strahlenbündel wird in der Meridional- und der Sagittalebene unterschiedlich stark gebrochen. In Richtung der Meridionalebene, auch Transversalebene genannt, ist eine Linse perspektivisch verkürzt, woraus eine kürzere Brennweite resultiert als in der Sagittalebene. Daher haben sagittale und transversale Strahlen in unterschiedlichen Abständen entlang der optischen Achse, sprich in der Tiefenrichtung, ihren Brennpunkt. Diese Brennpunkte werden transversaler Brennpunkt und sagittaler Brennpunkt genannt. Bei Astigmatismus wird daher ein Punkt eines Objekts, der nicht auf der optischen Achse liegt, nicht scharf abgebildet. Stattdessen werden scharfe Linien bzw. Ovale am sagittalen und transversalen Brennpunkt gebildet. Zwischen diesen zwei Brennpunkten wird ein rundes, unscharfes Bild gebildet. Kreise mit der optischen Achse als Zentrum oder Linien bzw. Kanten, die tangential zu solchen Kreisen sind, werden im transversalen Brennpunkt scharf abgebildet. Linien bzw. Kanten, die in radialer Richtung verlaufen, werden im sagittalen Brennpunkt scharf abgebildet.

Dies ist in Fig. 12 am Beispiel eines rechteckigen Teststreifens einer USAF-Auflösungstesttafel demonstriert. Die Kanten des Teststreifens verlaufen in zwei Richtungen, die senkrecht zueinander angeordnet sind. Die Bildpunkte der horizontalen Kante und der vertikalen Kante sind nicht im tatsächlichen Abstand (z-Position) zu dem Teststreifen scharf gestellt. Stattdessen ist eine Kante (im Beispiel der Fig. 12 die vertikale 35 Kante) in einem geringeren Abstand als dem tatsächlichen Abstand scharf gestellt, wohingegen die andere Kante (im Beispiel der Fig. 12 die horizontale Kante) im einem größeren Abstand als dem tatsächlichen Abstand scharf gestellt ist. Mit anderen Worten führt Astigmatismus zu einem Versatz in der Tiefenrichtung, wobei die Richtung des Versatzes von der Ausrichtung der Kante, sprich dem Winkel abhängt.

Um den Astigmatismus-Fehler zu korrigieren, kann dieser Fehler in jedem Punkt der Tiefenkarte in zwei Anteile entsprechend zweier senkrechter Richtungen in der X-Y Ebene zerlegt werden, insbesondere in einen horizontalen Anteil und einen vertikalen Anteil. Jedem Punkt der Tiefenkarte kann dann ein dritter Korrekturwert und ein vierter Korrekturwert zugeordnet werden. Der Astigmatismus kann als Fit einer Höhenabweichung gegenüber einer azimuthal variierenden Kante modelliert werden ($z = f(\Theta)$). Insbesondere kann der Astigmatismus als Linearkombination aus zwei radialsymmetrischen Sinusfunktionen modelliert werden. Die Sinusfunktionen sind Funktionen eines Winkels in der X-Y Ebene. Vorzugsweise sind die beiden Sinusfunktionen um $\pi/2$ verschoben. Insbesondere ist die erste Sinusfunktion ein Sinus und die zweite Sinusfunktion ein Cosinus. Dabei entspricht der dritte Korrekturwert dem Koeffizienten in der ersten Sinusfunktion und der vierte Koeffizient dem Koeffizienten der zweiten Sinusfunktion. Der dritte Korrekturwert und der vierte Korrekturwert stellen somit zwei Korrekturwerte in zwei senkrecht zueinanderstehenden Richtungen dar. Der Astigmatismus kann insbesondere mit der Formel $\alpha \sin \theta + \beta \cos \theta$ modelliert werden, wobei $\alpha$ der dritte Korrekturwert, $\beta$ der vierte Korrekturwert und $\theta$ ein Winkel in der X-Y Ebene ist.

Zum Korrigieren des Astigmatismus-Fehlers wird insbesondere zunächst für den Bereich der Oberfläche des Werkstücks 12 eine Winkelkarte erzeugt. Zum Erzeugen der Winkelkarte wird zunächst ein EDOF Bild des erfassten Bereichs des Punkgitters betrachtet. Das EDOF Bild kann beispielsweise auf Basis der Tiefenkarte und der Bilder des Fokalbildstapels des Punktgitters erzeugt werden. In dem EDOF Bild kann dann für jeden Punkt ein Bildgradient bestimmt werden. Der Bildgradient bestimmt sich aus einer Änderung der Helligkeit zu umliegenden Bildpunkten. Die Richtung des Bildgradienten kann mittels eines Winkels dargestellt werden. Dieser Winkel gibt eine Richtung in der X-Y Ebene an. Auf diese Weise können für jeden Punkt des EDOF Bilds ein Bildgradient und ein entsprechender Winkel bestimmt werden. Die bestimmten Winkel bilden dann die Winkelkarte. Mit anderen Worten stellt die Winkelkarte für jeden Punkt der Tiefenkarte den entsprechenden Winkel des Bildgradienten dar. Des Weiteren können auch direktionale Sobel Filter genutzt werden, um eine Mehrzahl von Winkelkarten des Bereichs zu erzeugen. Dabei kann dann eine gemittelte Winkelkarte verwendet werden, um Rauschen oder Störungen zu reduzieren bzw. zu eliminieren. Es soll nochmals erwähnt werden, dass die Punkte des Punktgitters nicht entsprechend dem Raster der Bildpunkte des Fokalbildstapels vorliegen müssen. Es muss lediglich eine eindeutige Zuordnung ermittelt werden, die die Korrektur der Tiefenwerte ermöglicht. Wenn hier anhand eines konkreten Ausführungsbeispiels davon ausgegangen wird, dass das Raster der Punkte des Punktgitters auch das Raster der Bildpunkte ist, dann beschränkt dies die Allgemeinheit nicht und das Ausführungsbeispiel kann entsprechend abgeändert werden.

Der Tiefenwert jedes Punkts der Tiefenkarte kann basierend auf dem dritten Korrekturwert, dem vierten Korrekturwert und der Winkel karte korrigiert werden. Da aus der Winkel karte für jeden Teilbereich, für den ein Tiefenwert bestimmt wurde oder wird, der Winkel $\theta$ bestimmt oder ermittelbar ist, kann somit jeder Tiefenwert korrigiert werden mit dem effektiven Korrekturwert gemäß der Formel $\alpha \sin \theta + \beta \cos \theta$ (siehe oben). Die Korrektur des jeweiligen Tiefenwerts erfolgt dann zum Beispiel durch Subtraktion des entsprechenden effektiven Korrekturwerts von dem jeweiligen Tiefenwert.

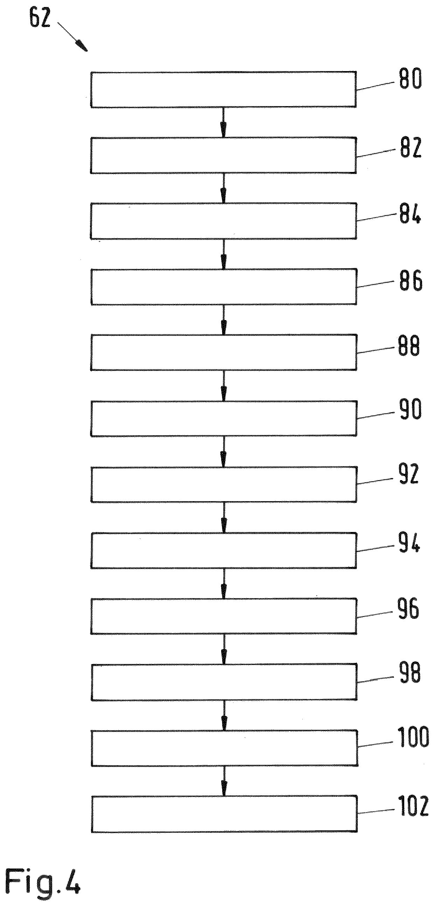

Die Korrekturwerte zum Korrigieren der jeweiligen Abbildungsfehler können wie in Fig. 4 Unten beschrieben im Voraus bestimmt werden.

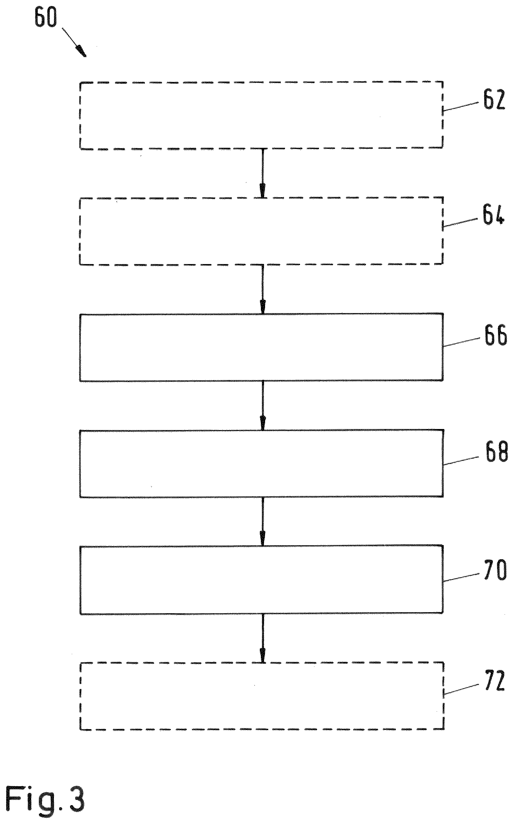

Fig. 3 zeigt ein Verfahren 60 zum Vermessen einer Oberfläche des Werkstücks 12 mit dem optischen Sensor 14 des Messgeräts 10. Das Werkstück wird zum Vermessen an dem Werkstückhalter angeordnet. Der optische Sensor 14 kann dann einen Bereich der Oberfläche des Werkstücks 12 erfassen. Der optische Sensor 14 und das Werkstück 12 sind in einer Tiefenrichtung 20 relativ zueinander bewegbar, so dass der Abstand 22 in der Tiefenrichtung 20 zwischen dem Werkstück 12 und dem optischen Sensor 14 veränderbar ist.

In einem Schritt 66 des Verfahrens 60 wird der Abstand 22 zwischen dem Werkstück und dem optischen Sensor verändert. Dazu kann die Antriebseinrichtung den optischen Sensor 14 relativ zu dem Werkstückhalter 16 in der Tiefenrichtung 20 bewegen und/oder den Werkstückhalter 16 relativ zu dem optischen Sensor 14 in der Tiefenrichtung 20 bewegen, um den Abstand 22 zwischen dem Werkstück 16 und dem optischen Sensor 14 zu verändern. Insbesondre kann der Abstand 22 in diskreten Schritten, beispielsweise in Schritten von $50\mu m$ verändert werden.

In einem weiteren Schritt 68 des Verfahrens 60 wird eine Mehrzahl von Bildern eines Bereichs der Oberfläche des Werkstücks mittels des optischen Sensors erfasst, während der Abstand 22 zwischen dem Werkstück und dem optischen Sensor verändert wird, wobei die Bilder jeweils den Bereich der Oberfläche des Werkstücks 12 aus unterschiedlichen, definierten Abständen 22 zu dem Werkstück 12 in der Tiefenrichtung 20 abbilden wobei die erfassten Bilder einen Fokalbildstapel bilden.

In einem weiteren Schritt 70 des Verfahrens 60 werden Tiefenwerte mittels des Verfahrens aus Fig. 2 erzeugt. Des Weiteren kann auch auf Basis der bestimmten Tiefenwerte und der Bilder des Fokalbildstapels ein EDOF Bild erzeugt werden.

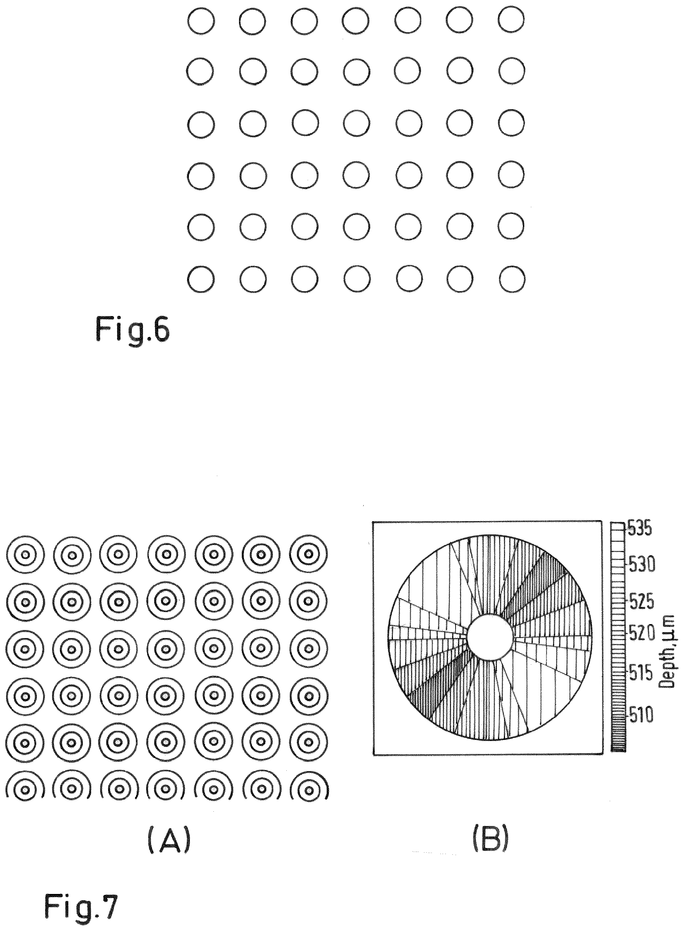

In einem weiteren optionalen Schritt 72 des Verfahrens 60 werden die bestimmten Tiefenwerte zum Beispiel als Tiefenkarte mittels der Ausgabeeinrichtung 36 ausgegeben. Alternativ oder zusätzlich kann die Ausgabeeinrichtung 36 auch das erzeugte EDOF Bild ausgeben. In einem weiteren optionalen Schritt 64 des Verfahrens 60 wird das Werkstück 12 mittels der Beleuchtungseinrichtung 32 während des Erfassens der Bilder des Fokalbildstapels beleuchtet. In einem weiteren optionalen Schritt 62 des Verfahrens 60 wird mindestens einer der Korrekturwerte der Abbildungsfehler bestimmt. Dazu wird vor dem Vermessen des Werkstücks, insbesondere vor den Schritten 62 bis 72, eine Tiefenkarte eines Kalibrationsobjekts, insbesondere eines Punktgitters, erzeugt. Die Tiefenkarte des Kalibrationsobjekts wird entsprechend der Schritte 62 bis 70 mit einem Kalibrationsobjekt als Werkstück erzeugt, wobei beim Erzeugen der Tiefenkarte des Kalibrationsobjekts keine Korrektur von Abbildungsfehlern vorgenommen wird. Fig. 6 zeigt eine exemplarische Darstellung eines Kalibrationsobjekts in Form eines Punktgitters. Da das Oberflächenprofil des Kalibrationsobjekts bekannt ist, wird der mindestens eine der Korrekturwerte dann basierend auf einer Abweichung der Tiefenkarte zu dem bekannten Oberflächenprofil des Kalibrationsobjekts bestimmt.

Der Schritt 62 ist somit als Kalibrierungsschritt zu verstehen, bei dem systematische Messfehler des optischen Sensors bestimmt und entsprechende Korrekturwerte ermittelt werden. Zur Kalibrierung wird in diesem Fall ein Punktgitter verwendet

Fig. 4 zeigt Verfahrensschritte, mittels denen die Korrekturwerte in dem Schritt 62 des Verfahrens 60 bestimmt werden. In einem ersten Schritt 80 wird die Tiefenkarte des Punktgitters erzeugt. Die Tiefenkarte des Punktgitters wird entsprechend der Schritte 62 bis 70 mit einem Punktgitter als Werkstück 12 erzeugt, wobei beim Erzeugen der Tiefenkarte des Punkgitters keine Korrektur von Abbildungsfehlern vorgenommen wird. Eine exemplarische Darstellung einer Tiefenkarte eines Punktgitters ist in Abbildung (A) der Fig. 7 dargestellt. Auf Basis der Tiefenkarte und des Fokalbildstapels des Punktgitters kann zusätzlich ein EDOF Bild des erfassten Bereichs der Oberfläche des Punktgitters erzeugt werden. In einem weiteren Schritt 82 werden die Tiefenwerte jedes einzelnen Punkts des Punktgitters segmentiert. Zur Segmentierung kann eine Hough-Transformation verwendet werden, mittels der Kreise erkannt werden können. Die Hough-Transformation kann beispielsweise auf das EDOF Bild angewandt werden, um die Position der einzelnen Punkte des Punktgitters zu detektieren. Dies ist für einen Punkt des Punkgitters exemplarisch in Abbildung (B) der Fig. 7 dargestellt.

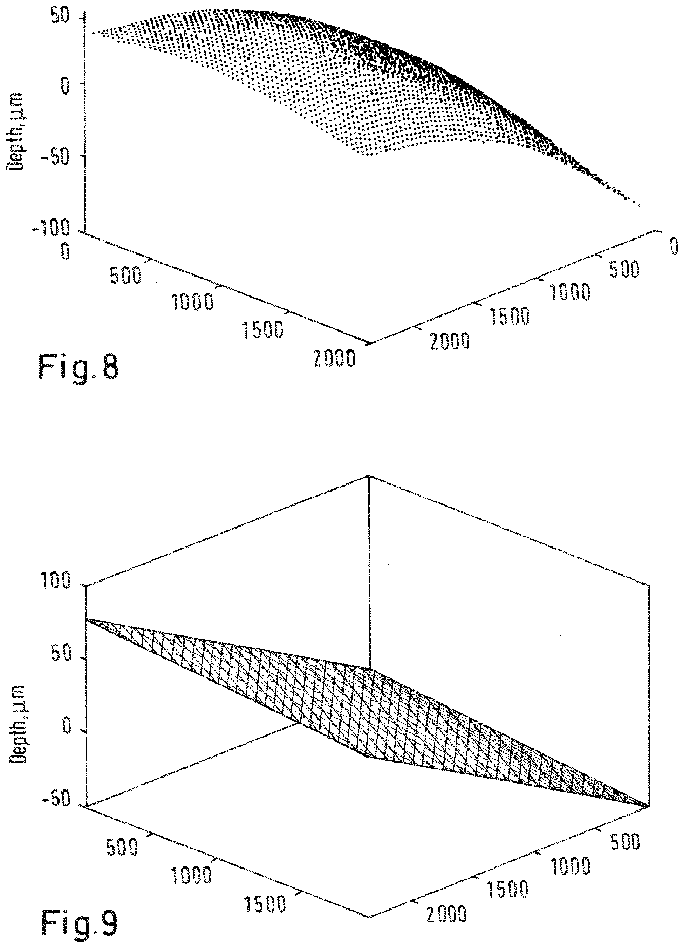

In einem weiteren Schritt 84 wird ein Mittelwert der Tiefenwerte des jeweiligen Punkts des Punktgitters bestimmt. Mit anderen Worten wird für jeden Punkt des Punktgitters ein gemittelter Tiefenwert bestimmt. In einem weiteren Schritt 86 wird eine erste Punktwolke der Punkte des Punktgitters basierenden auf den bestimmten Mittelwerten der Tiefenwerte der Punkte des Punktgitters erzeugt. Eine exemplarische Darstellung einer ersten Punktwolke eines Punktgitters ist in Fig. 8 dargestellt. In einem weiteren Schritt 88 wird eine Ebene an die erste Punktwolke eingepasst. Eine exemplarische Darstellung einer eingepassten Ebene an die erste Punktwolke aus Fig. 8 ist in Fig. 9 dargestellt.

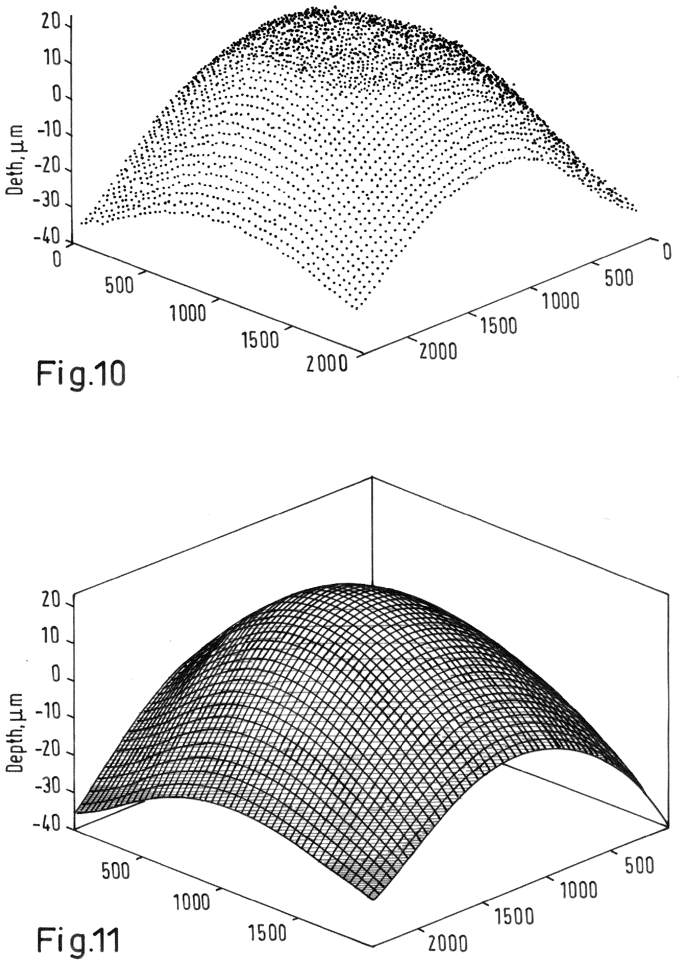

In einem weiteren Schritt 90 werden die ersten Korrekturwerte basierend auf einem Kippwinkel der Normalen der Ebene gegenüber der Tiefenrichtung bestimmt. Mit anderen Worten wird jeder erste Korrekturwert basierend auf einer Abweichung der eingepassten Ebene gegenüber einer horizontalen Ebene, deren Normale senkrecht zur Tiefenrichtung ist, bestimmt. In einem weiteren Schritt 92 wird eine zweite Punktwolke der Punkte des Punktgitters basierenden auf den bestimmten Mittelwerten der Tiefenwerte der Punkte des Punktgitters und den zuvor bestimmten, ersten Korrekturwerten erzeugt, wobei die Mittelwerte der Punkte des Punktgitters mittels der ersten Korrekturwerte korrigiert werden. Eine exemplarische Darstellung einer zweiten Punktwolke des Punktgitters ist in Fig. 10 dargestellt.

In einem weiteren Schritt 94 wird eine gewölbte Funktion an die zweite Punktwolke eingepasst. Die gewölbte Funktion kann eine konvexe oder eine konkave Funktion sein. Die gewölbte Funktion kann eine polynomische Funktion sein, bei der die Tiefenwerte als Funktion der X-Werte in X-Richtung und Y-Werte in Y-Richtung definiert sind. Die gewölbte Funktion hat vorzugsweise in der Mitte des erfassten Bereichs ein Extremum, insbesondere ein Maximum. Eine exemplarische Darstellung einer eingepassten, gewölbten Funktion an die zweite Punktwolke aus Fig. 10 ist in Fig. 11 dargestellt.

In einem weiteren Schritt 96 werden die zweiten Korrekturwerte basierend auf einer Wölbung der gewölbten Funktion bestimmt. Mit anderen Worten wird jeder zweite Korrekturwert basierend auf einer Abweichung der eingepassten, gewölbten Funktion gegenüber einer horizontalen Ebene bestimmt. In einem weiteren Schritt 98 werden die segmentierten Tiefenwerte jedes Punkts des Punktgitters basierend auf den ersten und zweiten Korrekturwerten korrigiert. In einem weiteren Schritt 100 wird für jeden Punkt des Punktgitters ein dritter Korrekturwert und ein vierter Korrekturwert basierend auf einer Kostenfunktion L zwischen einem Astigmatismus-Modell und den korrigierten Tiefenwerten des jeweiligen Punkts des Punktgitters bestimmt. Als Astigmatismus-Modell kann eine Linearkombination aus zwei radial-symmetrischen Sinus-Funktionen verwendet werden. Das Astigmatismus-Modell kann beispielsweise durch die Formel $\alpha \sin \theta + \beta \cos \theta$ (siehe oben) definiert werden. Dabei sind wieder $\alpha$ und $\beta$ die Koeffizienten der Sinusfunktionen und $\theta$ ein Winkel in der X-Y Ebene um den Mittelpunkt des jeweiligen Punkts des Punktgitters. Die Kostenfunktion L ist entsprechend der Gleichung (17) definiert:

$$L(\alpha, \beta) = \Sigma |f(r, \theta) - (\alpha \sin \theta + \beta \cos \theta)|^2 \quad (17)$$

In der Kostenfunktion wird dabei eine Summe über diejenigen Punkte der Tiefenkarte gebildet, die dem entsprechenden Punkt des Punktgitters zugeordnet sind bzw. diesen abbilden. Die Lage dieser Punkte in der X-Y Ebene kann in Polarkoordinaten r und $\theta$ bezüglich des Mittelpunkts des jeweiligen Punkts des Punktgitters angegeben werden. F(r, $\theta$) gibt die Abweichung des Tiefenwerts dieser Punkte der Tiefenkarte gegenüber dem gemittelten Tiefenwert des Punkts des Punktgitters an. Die Kostenfunktion wird dann nach den Koeffizienten der Sinus-Funktionen minimiert. Der dritte und vierte Korrekturwert des Punkts des Punktgitters kann dann auf Basis der minimierten Koeffizienten $\alpha$ und $\beta$ bestimmt werden. Insbesondere entsprechen der dritte und vierte Korrekturwert des Punkts des Punktgitters den minimierten Koeffizienten.

In einem weiteren Schritt 102 werden die dritten und vierten Korrekturwerte der Punkte der Tiefenkarte basierend auf den dritten und vierten Korrekturwerten jedes Punkts des Punktgitters über den gesamten Bereich interpoliert. Auf diese Weise kann jedem Punkt der Tiefenkarte ein dritter und vierter Korrekturwert zugeordnet werden.

In Fig. 13 ist die Bestimmung der Korrekturwerte nochmals kurz zusammengefasst. Abbildung (A) zeigt den Bereich des Punkgitters, der mittels des optischen Sensors erfasst wird. Abbildung (B) zeigt eine Tiefenkarte des Bereichs des Punktgitters ohne Korrektur der Tiefenwerte. Abbildung (C) zeigt die Tiefenwerte eines segmentierten Punkt des Punktgitters. Abbildung (D) zeigt die Tiefenwerte des segmentierten Punkts des Punktgitters, nachdem der erste Korrekturwert und der zweite Korrekturwert bestimmt wurden und die Tiefenwerte auf Basis des ersten und zweiten Korrekturwerts korrigiert wurden. Abbildung (E) zeigt die Tiefenwerte des segmentierten Punkts des Punktgitters, nachdem der dritte Korrekturwert und der vierte Korrekturwert bestimmt wurden und die Tiefenwerte auf Basis des dritten und vierten Korrekturwerts korrigiert wurden.

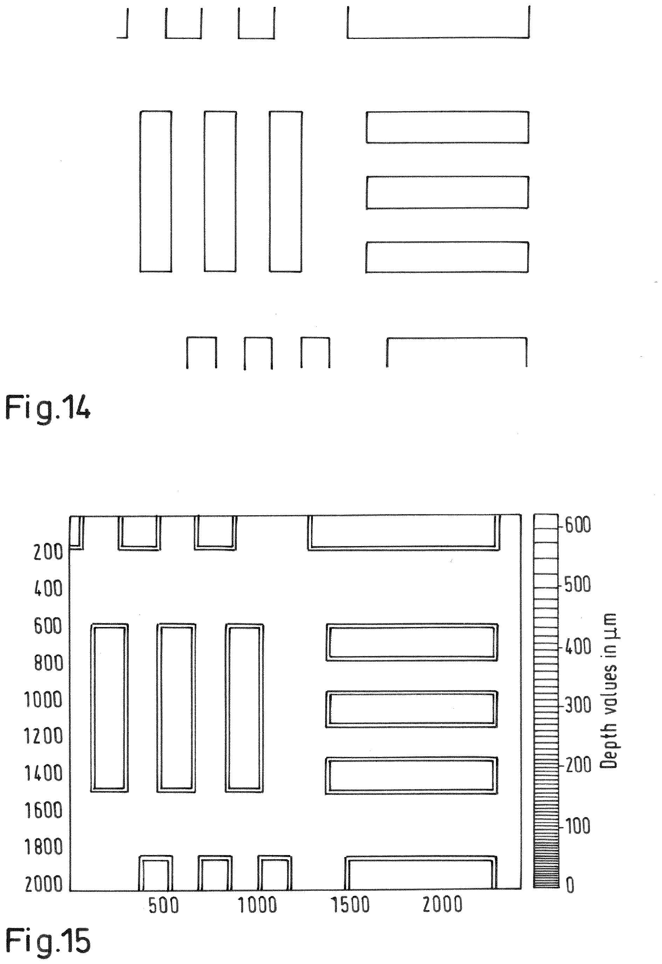

In den Fig. 14-20 ist die Anwendung des Verfahrens 60 aus Fig. 3 auf eine USAF-Auflösungstesttafel, auch USAF-Testobjekt genannt, als Werkstück 12 beschrieben. Das USAF-Testobjekt ist ein standardisiertes Testobjekt zur Bestimmung des Auflösungsvermögens von optischen Instrumenten. Das Beispiel der USAF-Auflösungstesttafel eignet sich besonders, um die Korrektur des Astigmatismus-Fehlers zu veranschaulichen. Die USAF-Auflösungstesttafel ist eine flache Ebene mit schwarzen und Weisen Flächen.

Insbesondere können auf weißen Untergrund schwarze Rechtecke aufgebracht sein. Ein Ausschnitt einer USAF-Auflösungstesttafel ist in Fig. 14 gezeigt. Der Astigmatismus-Fehler tritt insbesondere an den Übergängen zwischen schwarzen und weißen Flächen, sprich an den Rändern der Rechtecke auf.

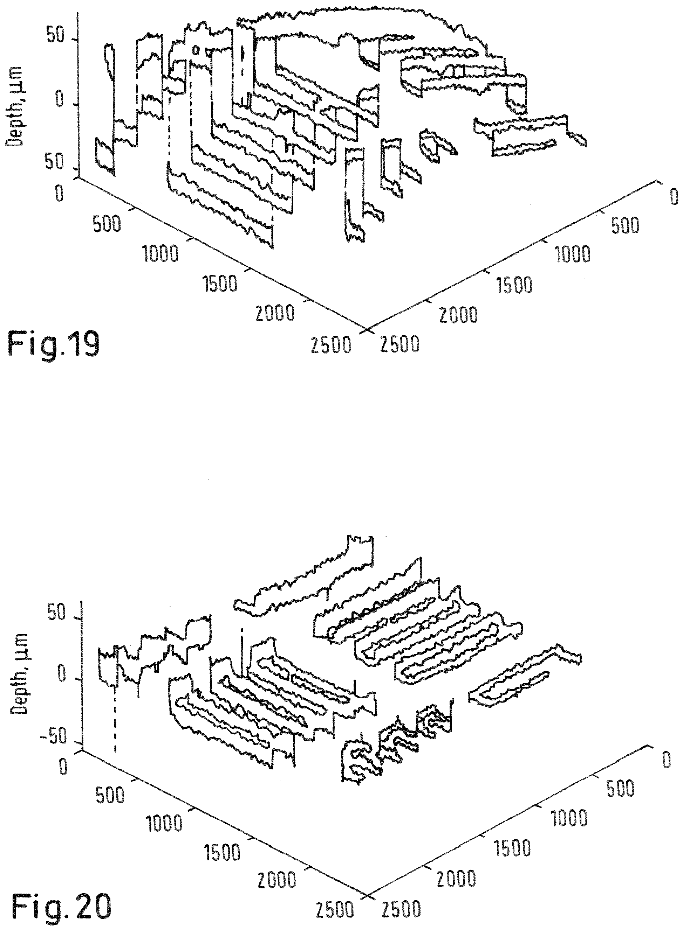

Zuerst wird für einen Bereich der Oberfläche der USAF-Auflösungstesttafel eine Tiefenkarte mittels der Verfahren aus Fig. 2 und 3 erzeugt. Exemplarische Darstellungen in 2D und 3D Ansicht sind in den Figuren 15 und 19 dargestellt, ohne Korrektur des Astigmatismus-Fehlers. Auf Basis der erzeugten Tiefenkarte und des entsprechenden Fokalbildstapels kann dann ein EDOF Bild des erfassten Bereichs der Oberfläche der USAF-Auflösungstesttafel erzeugt werden.

Exemplarische Darstellungen der Tiefenkarte der Figuren 15 und 19 zeigen, dass die Tiefenkarte weitestgehend flach ist mit Ausnahme Kanten, die rechteckig verlaufen. Diese Kanten weisen je nach Richtung andere Tiefenwerte auf. Diese Kanten verlaufen entsprechend der Kanten der Rechtecke der USAF-Auflösungstesttafel. Die Abweichungen der Tiefenwerte an den Kanten der Rechtecke sind ein Resultat des Astigmatismus-Fehlers. Da das reale Oberflächenprofil der USAF-Auflösungstesttafel eine ebene Fläche ist, müssen die Kanten der Rechtecke auf gleicher Höhe sein und daher denselben Tiefenwert aufweisen.

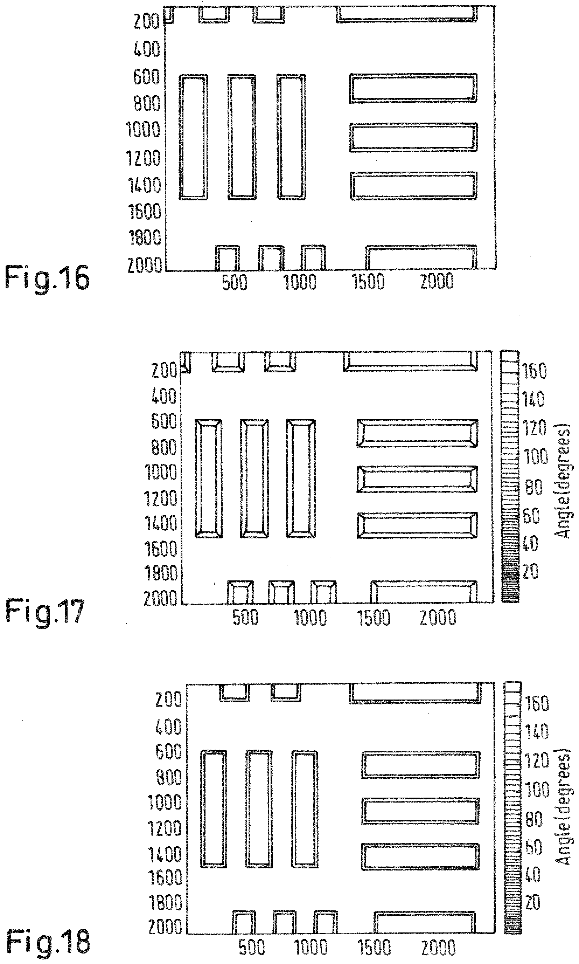

Um den Astigmatismus-Fehler zu korrigieren wird zunächst aus dem EDOF-Bild oder mit Hilfe des gesamten oder eines Teils des Fokalbildstapels eine Gradientenkarte errechnet. Die Gradientenkarte stellt den Bildgradienten für jeden Punkt dar. Die Stärke des Bildgradienten ist exemplarisch in Fig. 16 dargestellt. Auf Basis des Bildgradienten wird dann für jeden Punkt des EDOF Bildes ein Winkel des Bildgradienten bestimmt, wobei die bestimmten Winkel eine Winkelkarte bilden. Eine exemplarische Winkelkarte ist in Fig. 17 dargestellt. Mittels der erzeugten Winkelkarte sowie der dritten und vierten Korrekturwerte wird dann die Tiefenkarte der USAF-Auflösungstesttafel korrigiert. In den Figuren 18 und 20 ist eine exemplarische, korrigierte Tiefenkarte der USAF-Auflösungstesttafel dargestellt. Dabei weisen die Kanten, die in den Fig. 15 und 19 unterschiedliche Tiefenwerte hatten, im Wesentlichen gleiche Tiefenwerten auf. Mit anderen Worten hat der beschriebene Korrekturmechanismus dazu geführt, dass die Kanten in der Tiefenkarte nun entsprechend dem realen Oberflächenprofil auf gleicher Höhe angeordnet sind.

**Patentansprüche**

1. Computerimplementiertes Verfahren (40) zum Erzeugen von Tiefenwerten eines Oberflächenbereichs einer Oberfläche eines Werkstücks (12), mit den folgenden Schritten:

   - Empfangen (42) eines Fokalbildstapels, wobei der Fokalbildstapel eine Mehrzahl von Bildern des Werkstücks (12) aufweist, wobei die Bilder den Oberflächenbereich der Oberfläche des Werkstücks (12) mit in einer Tiefenrichtung unterschiedlichen Fokalebenenpositionen (22) als Bildbereich des Bildes abbilden, wobei jedem Bild des Fokalbildstapels eine Fokalebenenposition (22) zugeordnet ist und wobei Bildpunkte der Bilder jeweils einem entsprechenden Objektpunkt auf der Oberfläche des Werkstücks (12) zugeordnet sind;
   - Bestimmen (44) jeweils eines Bildschärfenwerts für eine Mehrzahl von Teilbereichen des Bildbereichs jedes Bildes des Fokalbildstapels;
   - Anpassen (46) eines Modells, mit dem ein Verlauf von Bildschärfenwerten jeweils für einen gemeinsamen abgebildeten Teilbereich des Oberflächenbereichs über die Bilder des Bildstapels beschreibbar ist, jeweils an tatsächliche Verläufe der bestimmten Bildschärfenwerte derjenigen Teilbereiche der Bildbereiche, die einen Stapel von Bild-Teilbereichen bilden, weil sie einem gemeinsamen abgebildeten Teilbereich des Oberflächenbereichs entsprechen;
   - Bestimmen (52) jeweils eines Tiefenwerts für die gemeinsamen Teilbereiche, wobei der Tiefenwert in dem Verlauf von Bildschärfenwerten des Modells einer größten Bildschärfe für den jeweiligen Stapel von Bild-Teilbereichen entspricht und ein Maß für eine Tiefenposition des gemeinsamen abgebildeten Teilbereichs des Oberflächenbereichs ist;
   - Korrigieren (52) mindestens eines Abbildungsfehlers der Bilder des Fokalbildstapels für zumindest einen der bestimmten oder zu bestimmenden Tiefenwerte, wobei der mindestens eine Abbildungsfehler ein Kippfehler und/oder ein Bildfeldwölbungs-Fehler und/oder ein Astigmatismus-Fehler ist.

2. Verfahren nach Anspruch 1, wobei aus den bestimmten Tiefenwerten eine Karte der Tiefen des Oberflächenbereichs erzeugt wird.

3. Verfahren (60) zum Vermessen einer Oberfläche eines Werkstücks (12) mit einem optischen Sensor (14) eines Messgeräts (10), wobei der optische Sensor (14) und das Werkstück (12) in einer Tiefenrichtung (20) voneinander beabstandet sind, mit den folgenden Schritten:

   - Erfassen (68) einer Mehrzahl von Bildern eines Oberflächenbereichs des Werkstücks (12) mittels des optischen Sensors (14), wobei die Bilder jeweils den Oberflächenbereich mit in der Tiefenrichtung unterschiedlichen Fokalebenenpositionen (22) als Bildbereich des Bildes abbilden, wobei die Bilder einen Fokalbildstapel bilden, wobei jedem Bild des Fokalbildstapels eine Fokalebenenposition (22) zugeordnet ist und wobei Bildpunkte der Bilder jeweils einem entsprechenden Objektpunkt auf der Oberfläche des Werkstücks (12) zugeordnet sind,
   - Bestimmen von Tiefenwerten des Oberflächenbereichs des Werkstücks (12) durch Ausführung des Verfahrens (40) nach einem der vorhergehenden Ansprüche.

4. Verfahren (60) nach dem vorhergehenden Anspruch, wobei der optische Sensor (14) und das Werkstück (12) in der Tiefenrichtung (20) relativ zueinander bewegbar sind, so dass ein Abstand (22) in der Tiefenrichtung (20) zwischen dem Werkstück (12) und dem optischen Sensor (14) veränderbar ist, wobei das Verfahren Folgendes aufweist:

   - Ausführen des Schritts des Erfassens (68) der Mehrzahl von Bildern des Oberflächenbereichs unter Verändern (66) des Abstands zwischen dem Werkstück (12) und dem optischen Sensor (14), wobei die Bilder jeweils den Oberflächenbereich des Werkstücks (12) bei unterschiedlichen Abständen (22) zu dem Werkstück (12) in der Tiefenrichtung (20) abbilden.

5. Verfahren (60) nach dem vorhergehenden Anspruch, wobei das Messgerät (10) einen Werkstückhalter (16) aufweist, wobei das Werkstück (12) zum Vermessen an dem Werkstückhalter (16) angeordnet wird.

6. Verfahren (60) nach dem vorhergehenden Anspruch, wobei das Messgerät (10) eine Antriebseinrichtung (28) aufweist, wobei die Antriebseinrichtung (28) den optischen Sensor (14) relativ zu dem Werkstückhalter (16) in der Tiefenrichtung (20) bewegt und/oder den Werkstückhalter (16) relativ zu dem optischen Sensor (14) in der Tiefenrichtung (20) bewegt, um den Abstand (22) zwischen dem Werkstück (12) und dem optischen Sensor (14) zu verändern.

7. Verfahren (60) nach einem der vier vorhergehenden Ansprüche, wobei das Verfahren des Weiteren den folgenden Schritt aufweist:

- für das Korrigieren (52) des mindestens einen Abbildungsfehlers Bestimmen (62) eines ersten Korrekturwerts und/oder eines zweiten Korrekturwerts und/oder eines dritten und vierten Korrekturwerts für zumindest einen der Mehrzahl von Teilbereichen des Bildbereichs, wobei vor dem Vermessen des Werkstücks eine Tiefenkarte eines Kalibrationsobjekts, insbesondere eines Punktgitters, erzeugt wird,

wobei der jeweilige Korrekturwert basierend auf einer Abweichung der Tiefenkarte zu einem bekannten Oberflächenprofil des Kalibrationsobjekts bestimmt wurde.

8. Verfahren (60) nach dem vorhergehenden Anspruch, wobei das Bestimmen der ersten Korrekturwerte die folgenden Schritte aufweist:

- Erzeugen (86) einer ersten Punktwolke aller Punkte des Punktgitters basierend auf Mittelwerten der Tiefenwerte jedes einzelnen Punkts des Punktgitters;
- Einpassen (88) einer Ebene durch die erste Punktwolke; und
- Bestimmen (90) der ersten Korrekturwerte basierend auf einem Kippwinkel einer Normalen der Ebene gegenüber der Tiefenrichtung.

9. Verfahren (60) nach einem der beiden vorhergehenden Ansprüche, wobei das Bestimmen der zweiten Korrekturwerte die folgenden Schritte aufweist:

- Erzeugen (92) einer zweiten Punktwolke aller Punkte des Punktgitters basierend auf Mittelwerten der Tiefenwerte jedes einzelnen Punkts des Punktgitters;
- Einpassen (94) einer gewölbten Funktion an die zweite Punktwolke; und
- Bestimmen (96) der zweiten Korrekturwerte basierend auf einer Wölbung der gewölbten Funktion.

10. Verfahren (60) nach einem der drei vorhergehenden Ansprüche, wobei das Bestimmen der dritten und vierten Korrekturwerte die folgenden Schritte aufweist:

- Bestimmen (100) des dritten Korrekturwerts und des vierten Korrekturwerts für jeden Punkt des Punktgitters basierend auf einer Kostenfunktion zwischen einem Astigmatismus-Modell und den Tiefenwerten des jeweiligen Punkts; und
- Interpolieren (102) der dritten und vierten Korrekturwerte basierend auf den dritten und vierten Korrekturwerten jedes Punkts des Punktgitters.

11. Computerprogramm, das Programmcodemittel zur Durchführung des Verfahrens (40) nach einem der vorhergehenden Ansprüche aufweist, wenn das Computerprogramm auf einer Recheneinrichtung (26) ausgeführt wird.

12. Anordnung mit einer Recheneinrichtung (26) und mit einem Messgerät (10), insbesondere einem Koordinatenmessgerät oder einem Mikroskop, zum Vermessen einer Oberfläche eines Werkstücks (12), wobei das Messgerät einen Raum zum Anordnen des Werkstücks (12) während der Vermessung der Oberfläche des Werkstücks (12) aufweist, wobei das Messgerät (10) einen optischen Sensor (14) aufweist, der dazu ausgebildet ist, Bilder eines Oberflächenbereichs des Werkstücks (12) zu erfassen, während der optische Sensor (14) und das Werkstück (12) in einer Tiefenrichtung (20) voneinander beabstandet sind, wobei die Recheneinrichtung (26) dazu eingerichtet ist, die folgenden Schritte durchzuführen:

- Bestimmen von Tiefenwerten des Oberflächenbereichs des Werkstücks (12) durch Ausführung des Verfahrens nach einem der vorhergehenden Ansprüche.

13. Anordnung nach dem vorhergehenden Anspruch, wobei eine Steuereinrichtung (26) des Messgeräts (10) des Weiteren dazu eingerichtet ist, die folgenden Schritte, insbesondere vor dem Schritt des Bestimmens der Tiefenwerte, durchzuführen:

- Steuern des optischen Sensors (14) derart, dass eine Mehrzahl der Bilder des Oberflächenbereichs des Werkstücks (12) mittels des optischen Sensors (14) erfasst wird, wobei die Bilder den Oberflächenbereich der Oberfläche des Werkstücks (12) mit in einer Tiefenrichtung unterschiedlichen Fokalebenenpositionen (22) als Bildbereich des Bildes abbilden, wobei jedem Bild des Fokalbildstapels eine Fokalebenenposition (22) zugeordnet ist und wobei Bildpunkte der Bilder jeweils einem entsprechenden Objektpunkt auf der Oberfläche des Werkstücks (12) zugeordnet sind.

14. Anordnung nach dem vorhergehenden Anspruch, wobei die Steuereinrichtung (26) des Weiteren dazu eingerichtet ist, insbesondere vor dem Bestimmen der Tiefenwerte, unter Veränderung eines Abstandes (22) zwischen dem Werkstück (12) und dem optischen Sensor (14) die Antriebseinrichtung (28) derart zu steuern, dass die Mehrzahl von Bildern erfasst wird, wobei die Bilder jeweils den Oberflächenbereich der Oberfläche des Werkstücks (12) aus unterschiedlichen Abständen (22) zu dem Werkstück (12) in der Tiefenrichtung (20) abbilden.

Fig.1

Fig. 2

40

42

44

46

48

50

52

Fig.3

62

80

82

84

86

88

90

92

94

96

98

100

102

Fig.4

Fig. 5

Fig.6

(A)

(B)

Fig.7

Fig.8

Fig.9

Fig.10

Fig.11

Fig.12

Fig.13 (A) (B) (C) (D) (E)

Fig.14

Fig.15

Fig.16

Fig.17

Fig.18

Fig.19

Fig.20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2598836 A1
- US 2013162807 A1
- DE 102014006717 A1
- DE 102004047928 A1

**In der Beschreibung aufgeführte Nicht-Patentliteratur**

- Shape From Focus System'' von Shree K. Nayar, IEEE Conference on Computer Vision and Pattern Recognition (CVPR), 1992, 302-308 sowie in dem Artikel ''Focus Variation Instruments. **VON FRANZ HELMLI.** Optical Measurement of Surface Topography. Springer Verlag, 131-166
- **VON SAID PERTUZ ; DOMENEC PUIG ; MIGUEL ANGEL GARCIA.** Analysis of focus measure operators for shape-from-focus. *Pattern Recognition,* 2013, vol. 46, 1415-1432